(19) Europäisches Patentamt
European Patent Office
Office européen des brevets

(11) EP 2 264 040 A1

(12) EUROPEAN PATENT APPLICATION

(43) Date of publication:
22.12.2010 Bulletin 2010/51

(51) Int Cl.:
*C07F 9/38* (2006.01) *H01M 8/02* (2006.01)

(21) Application number: 09007533.4

(22) Date of filing: 05.06.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(71) Applicant: Max-Planck-Gesellschaft zur Förderung der Wissenschaften e.V.
80539 München (DE)

(72) Inventors:
- Jiménez García, Lucia, Dipl.-Chem.
55116 Mainz (DE)
- Klapper, Markus, Dr.
55128 Mainz (DE)
- Müllen, Klaus, Prof. Dr.
50939 Köln (DE)

(74) Representative: Luderschmidt, Schüler & Partner
Patentanwälte
John-F.-Kennedy-Strasse 4
65189 Wiesbaden (DE)

(54) **Proton-conducting organic materials**

(57) Proton-conducting material having a degree of crystallinity of at least 30%, which comprises:
i) at least one organic compound having the formula (I),

$$R^1(R^2)_m(R^3)_n \quad (I)$$

wherein
- $R^1$ is an optionally fused aromatic, cyclic or polycyclic moiety comprising 1 to 200 carbon atoms, able to have 3 to 60 substituents;
- the substituents $R^2$ are identical or different and are each a group comprising at least one phosphonic acid moiety;
- the substituents $R^3$ are identical or different and are each hydrogen, a halogen atom, or a group having 1 to 60 carbon atoms;
- m is a number within the range 3 to 60;
- n is a number within the range 0 to 57;
- m+n is within the range of 3 to 60;
- said compound comprises at least 4, optionally fused, aromatic moieties, and

ii) crystal water.

EP 2 264 040 A1

## Description

The present invention relates to proton-conducting organic materials and their use in electrode materials, as a polyelectrolyte and/or as an additive for fuel cell applications.

Proton conductivity and mobility has been largely studied by chemists, physicists as well as biologists due to its importance in biological (like photosynthesis or adenosine 5'-triphosphate (ATP)" production; see A. Chernyshev, K. M. Armstrong, S. Cukierman, Biophys. J. 84, 238 (2003); C. H. Yu, S. Cukierman, R. Pomès, Biophys. J. 84, 816 (2003)) as well as in chemical processes (like electricity generation in a hydrogen FC; see R. Pomes, Biological Physics 1999, 487,194 - 200).

A fuel cell (FC) is a promising energy device which can provide electrical energy with high efficiency and low environmental impact. A critical issue severely hampering FC performance is the synthesis of proton-exchanging membranes (PEM) which simultaneously provide high and constant over temperature proton conductivity.

State-of-the-art separator materials used as PEM in FC systems often consist of sulfonic acid functionalized perfluorinated polymers such as Nation®. These materials present high but temperature dependent proton conductivity because proton transport is governed by the *vehicle mechanism* which makes their performance strongly dependent on the hydration of the membrane (see K. D. Kreuer, S. J. Paddison, E. Spohr, M. Schuster, Chem. Rev. 104, 4637 (2004)). The *vehicle mechanism* consists of the diffusion of hydrated protons or proton containing groups (e.g. $H_3O^+$, $NH_4^+$) as a whole in a medium of low viscosity and high diffusion coefficient such as water (see a) K. D. Kreuer, S. J. Paddison, E. Spohr, M. Schuster, Chem. Rev. 104, 4637 (2004); b) K. D. Kreuer, Chem. Mater. 8, 610 (1996)).

Another disadvantage of these polymeric membranes is that they cannot be applied at elevated temperatures since they suffer from the loss of water. However, working at elevated temperatures would be a major advantage for FC technology, since carbon monoxide tolerance of the catalyst systems is temperature dependent and working above 120°C would allow for a lower catalyst load thereby reducing cost. Dispensability of water management is another profitable advantage when working at high temperatures. Therefore, the synthesis of an electrolyte which provides both high and constant intrinsic proton conductivity in the intermediate temperature regime (100 - 200 °C) is currently one of the biggest challenges for new separator materials.

In the case of automotive applications, a guideline of 120 °C and 50 % relative humidity (RH) was established by the U.S. Department of Energy as target operating conditions, and a goal close to $1.10^{-1}$ $S.cm^{-1}$ for the proton conductivity of the membrane (see M. A. Hickner, H. Ghassemi, Y. S. Kim, B. R. Einsla, J. E. McGrath, Chem. Rev. 2004, 104, 4587 - 4612).

Crystals with proton-conducting properties are alternatives to common amorphous polymer electrolytes because proton conductivity is not governed by diffusion processes but by the order in the crystalline structure. Although a lot of effort has been made to investigate inorganic crystals, very little information on entirely organic crystals has been published to date (see a) K. Hinokuma, M. Ata. Chem Phys. Lett. 341, 442 (2001); b) Y. M. Li, K. Hinokuma, Solid State Ionics 150, 309 (2002); c) M. Yamada, I. Honma, Chem. Phys. Lett. 402, 324 (2005)).

Inorganic crystals or solid acid proton conductors, based on tetrahedral oxyanion groups (such as $SO_4^{2-}$, $SeO^{2-}{}_4$, $PO_4^{2-}$, and $AsO_4^{2-}$) and metal cations (such as $Cs^{2+}$), have been extensively studied in the past years (see a) S. M. Haile, C. R. I. Chisholm, K. Sasaki, D. A. Boysen, T. Uda, Faraday Discuss. 134, 17 (2007); b) D. Boysen, T. Uda, C. R. I. Chisholm, S. M. Haile, Science 303, 68 (2004)). The major advantages of these solid acid proton conductors are their capacity to provide high anhydrous proton conductivities in the superprotonic phase as well as their high melting points. However, solid acids are water soluble, possess poor mechanical properties (are ductile in their superprotonic phase) and high-temperature operation conditions are required (temperatures above the temperature at which the superprotonic phase transition takes place). For these reasons, these inorganic crystals are not very suitable for the use in FC systems.

The crystal structure of hexaphenylbenzene (HPB) and its derivatives is known for a long time (see (a) J. C. J. Bart, Acta Cryst. 1968, B24, 1277 - 1287; b) M. D. Watson, A. Fechtenkötter, K. Müllen, Chem. Rev. 2001, 101, 1267 - 1300).

Most recently, crystallographic studies on HPB derivatives have been carried out (see (a) K. Kobayashi, T. Shirasaka, A. Sato, E. Horn, N. Furukawa, Angew. Chem. Int. Ed. 1899, 38, 3483 - 3485; b) K. Kobayashi, T. Shirasaka, A. Sato, E. Horn, N. Furukawa, Tetrahedron Lett. 2000, 41, 89 - 93; c) K. Kobayashi, A. Sato, S. Sakamoto, K. Yamaguchi, J. Am. Chem. Soc. 2003, 125, 3035 - 3045; d) K. E. Maly, E. Gagnon, T. Maris, J. D. Wuest, J. Am. Chem. Soc. 2007, 129, 4306 - 4322). It was found that almost all the molecules present multiple hydrogen bonds in the molecular plane and additionally form hydrogen bonds between adjacent sheets in a way that columnar supramolecular networks are formed.

Furthermore, phosphonic acid groups have been suggested as protogenic groups for intrinsically conducting separator materials due to their amphoteric properties (see (a) M. Schuster, T. Rager, A. Noda, K. D. Kreuer, J. Maier, Fuel Cells 2005, 5, 355 - 365; b) H. Steininger, M. Schuster, K. D. Kreuer, A. Kaltbeitzel, B. Bingöl, W. H. Meyer, S. Schauff, G. Brunklaus, J. Maier, H. W. Spiess, Phys. Chem. Chem. Phys. 2007, 9, 1764 - 1773).

However, up to now typically the on-going FC research focuses on increasing the flexibility of the protogenic groups by for example introducing spacers or by adding small molecules (see (a) M. Schuster, T. Rager, A. Noda, K. D. Kreuer, J. Maier, Fuel Cells 2005, 5, 355 - 365; b) S. J. Paddison, K. D. Kreuer, J. Maier, Phys. Chem. Chem. Phys. 2006, 8, 4530 - 4542).

It is an object of the present invention to provide proton conducting materials having improved properties, in particular a very high proton conductivity, which is preferably constant over a broad temperature range, preferably within the temperature range of -20°C to 250°C, in particular within the temperature range of 20°C to 200°C, very preferably within the temperature range of 80°C to 180°C, especially within the temperature range of 100°C to 160°C. In addition, very good mechanical properties are aimed at, in particular a high durability and a high stability. Furthermore, a low water solubility is desired and said materials should be suitable for use in FC systems, preferably within the temperature range of - 20°C to 250°C, in particular within the temperature range of 20°C to 200°C, very preferably within the temperature range of 80°C to 180°C, especially within the temperature range of 100°C to 160°C. Finally, said materials should be obtainable in a cheap and simple manner and should allow for cheap and simple processing.

We have now found that it is possible to increase proton mobility by a self-assembly and preorganization concept.

Accordingly, the underlying problems of the present invention are solved by the proton-conducting material of claim 15. Particular suitable organic compounds usable in said material are protected by the present claim 1. Preferred variations of said material and said compounds are described in the depending claims. The other claims are directed to particular favourable fields of application.

The present invention provides a proton-conducting material having a degree of crystallinity of at least 30%, which comprises:

i) at least one organic compound having the formula (I),

$$R^1(R^2)_m(R^3)_n \qquad (I)$$

wherein

- $R^1$ is an optionally fused aromatic, cyclic or polycyclic moiety comprising 1 to 200 carbon atoms, able to have 3 to 60 substituents;
- the substituents $R^2$ are identical or different and are each a group comprising at least one phosphonic acid moiety;
- the substituents $R^3$ are identical or different and are each hydrogen, a halogen atom, or a group having 1 to 60 carbon atoms;
- m is a number within the range 3 to 60;
- n is a number within the range 0 to 57;
- m+n is within the range of 3 to 60;
- said compound comprises at least 4, optionally fused, aromatic moieties,

and

ii) crystal water.

In this invention, organic materials, preferably organic crystals of small molecules are suggested as alternative to common polymeric electrolytes and inorganic crystals employed as PEM in FC systems. Thereby, phosphonic acid groups are introduced in aromatic structures and it is observed that proton conducting materials are obtained, which have improved properties, in particular a very high proton conductivity, which is very constant over a broad temperature range, preferably within the temperature range of -20°C to 250°C, in particular within the temperature range of 20°C to 200°C, very preferably within the temperature range of 80°C to 180°C, especially within the temperature range of 100°C to 160°C. In addition, said materials exhibit very good mechanical properties, in particular a very high durability and a very high stability. Furthermore, the water solubility of said materials is very low and they are particularly suitable for use in FC systems, preferably within the temperature range of -20°C to 250°C, in particular within the temperature range of 20°C to 200°C, very preferably within the temperature range of 80°C to 180°C, especially within the temperature range of 100°C to 160°C. Thereby, said materials are obtainable in a comparatively cheap and simple manner and allow for very cheap and simple processing.

The present invention refers to proton-conducting materials, preferably having a proton conductivity of at least $10^{-3}$ S/cm, especially of at least $5*10^{-2}$ S/cm, very preferably of at least $10^{-2}$ S/cm, in particular of at least $5*10^{-1}$ S/cm, most preferably of at least $10^{-1}$ S/cm. For the purposes of the present invention, said proton conductivity is preferably measured at 95% RH at 25°C. Further information regarding the measurement of said conductivity can be found in J. R. Macdonald, Impedance. Spectroscopy, Emphasizing Solid Materials and Systems, John Wiley and Sons, New York, 1987; and in Kremer F., Schonhals A., Luck W. Broadband Dielectric Spectroscopy. - Springer-Verlag, 2002.

The material of present invention comprises at least one organic compound comprising at least 4, suitably at least 5, preferably at least 6, very preferably at least 7, optionally fused, aromatic moieties. In that context, the term "aromatic moiety" refers to a moiety having an aromatic structure and therefore the ability to sustain an induced ring current. Further details regarding the meaning of said term can be found in the technical literature, e.g. in J. March Advanced organic chemistry, Wiley 1985, Chapter 2, subjection "aromaticity".

In the present invention, aromatic structures comprising 5-, 6-, 7- or 8-membered rings having 6 n-electrons are especially favoured, wherein 5- or 6-membered rings, especially 6-membered rings are particularly preferred. The ring atoms are preferably selected from carbon, nitrogen, sulphur and/or oxygen, wherein carbon atoms are particularly suitable. Very preferred structures comprise six-membered carbon rings without heteroatoms, such as nitrogen, oxygen and/or sulphur, i.e. optionally substituted or fused phenyl structures.

The compound may comprise fused aromatic moieties, in which a bond is shared by two individual aromatic moieties at the same time. In that case, the individual aromatic structures are counted separately in order to determine the total number of aromatic moieties.

The structure of the compound is given by the formula (I)

$$R^1(R^2)_m(R^3)_n \qquad (I)$$

Thereby, the $R^1$ is an optionally fused aromatic, cyclic or polycyclic moiety comprising 1 to 200 carbon atoms, preferably 1 to 100 carbon atoms, very preferably 1 to 60 carbon atoms. Said rest is able to have 3 to 60 substituents, preferably 3 to 40 substituents, very preferably 3 to 20 substituents. Particularly suitable rests $R^1$ comprise aromatic or heteroaromatic moieties, cyclic moieties, and/or polycyclic moieties.

Preferred aromatic or heteroaromatic moieties are derived from benzene, naphthalene, biphenyl, anthracene, pyrene, perylene, diphenyl ether, diphenylmethane, diphenyldimethylmethane, bisphenone, diphenyl sulfone, quinoline, pyridine, bipyridine, pyridazine, pyrimidine, pyrazine, triazine, tetrazine, pyrrole, pyrazole, anthracene, benzopyrrole, benzotriazole, benzoxathiadiazole, benzoxadiazole, benzopyridine, benzopyrazine, benzopyrazidine, benzopyrimidine, benzopyrazine, benzotriazine, indolizine, quinolizine, pyridopyridine, imidazopyrimidine, pyrazinopyrimidine, carbazole, acridine, phenazine, benzoquinoline, phenoxazine, phenothiazine, acridizine, benzopteridine, phenanthroline and phenanthrene.

Particularly preferred aromatic moieties are six-membered carbon rings without heteroatoms, and comprise moieties of the formula (II) and/or (III) and/or (IV) and/or (V) and/or (VI) and/or (VII) and/or (VIII) and/or (IX) and/or (X) and/or (XI) and/or (XII)

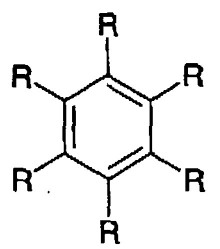

(II)

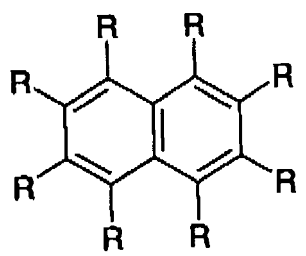

(III)

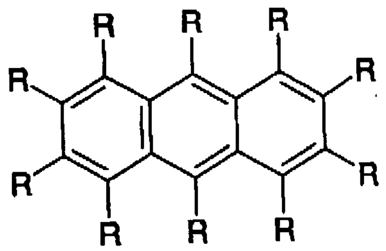

(IV)

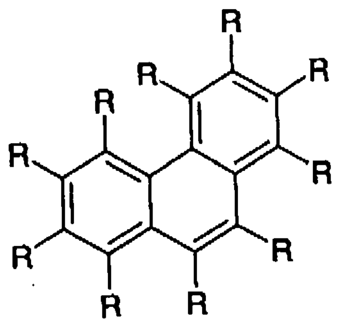

(V)

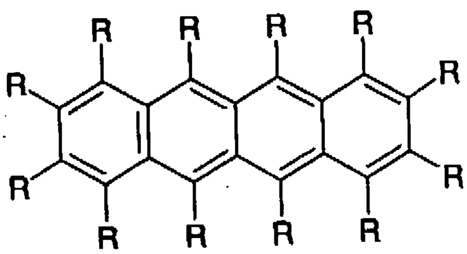

(VI)

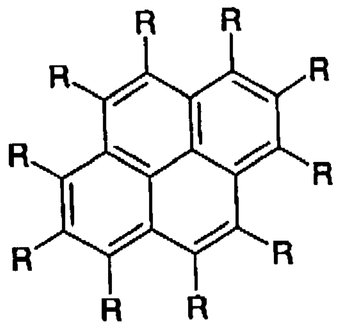

(VII)

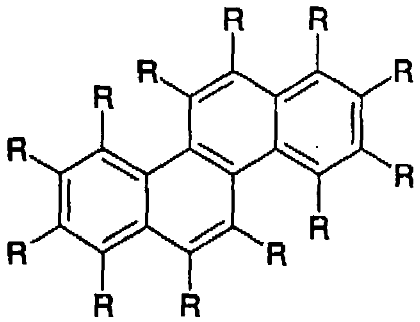

(VIII)

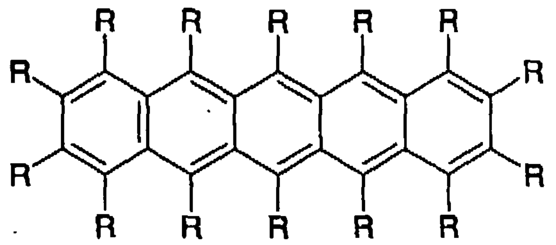

(IX)

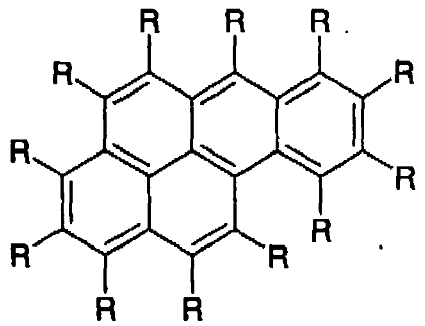

(X)

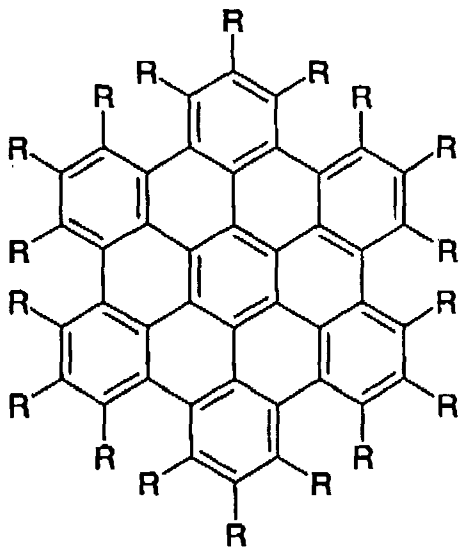

(XI)

wherein R are identical or different and indicate each the position of the substituents $R^2$ and/or $R^3$.

Preferred cyclic moieties are derived from cyclopropane, cyclobutane, cyclopentane, cyclohexane, cycloheptane, and/or cyclooctane, preferably from cyclopentane and/or cyclohexane, especially from cyclohexane.

Preferred polycyclic moieties are derived from cubane, bicyclo[2.2.1]heptane, bicyclo[2.2.2]octane, adamantane, twistane, and/or congressane, preferably from bicyclo[2.2.1]heptane, bicyclo[2.2.2]octane, adamantane, especially from adamantane. Particularly preferred polycyclic moieties comprise moieties of the formula (XII)

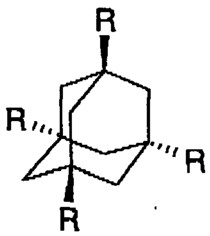

(XII)

wherein R are identical or different and indicate each the position of the substituents $R^2$ and/or $R^3$.

According to a particularly preferred embodiment of the present invention $R^1$ has a $C_3$ symmetry, preferably a $C_6$ symmetry, wherein the axis of rotation is preferably located perpendicular to the plane defined by the ring atoms of the aromatic structure of at least one of said aromatic moieties.

The substituents $R^2$ are identical or different and are each a group comprising at least one phosphonic acid moiety. Preferably, $R^2$ comprises 1 to 200 carbon atoms, preferably 1 to 100 carbon atoms, very preferably 1 to 60 carbon atoms.

In that context, alkyl phosphonic acid moieties, cycloalkyl phosphonic acid moieties and aryl phosphonic acid moieties are very preferred.

Particularly suitable alkyl phosphonic acid moieties $R^2$ are derived from $C_{1-10}$ alkyl phosphonic acids, especially from methyl phosphonic acid, ethyl phosphonic acid, propyl phosphonic acid, butyl phosphonic acid, pentyl phosphonic acid, and/or hexyl phosphonic acid, which may also be substituted.

Particularly suitable cycloalkyl phosphonic acid moieties $R^2$ are derived from cyclopentyl phosphonic acid, and/or cyclohexyl phosphonic acid, which may also be substituted.

Preferred aromatic or heteroaromatic phosphonic acid moieties $R^2$ are derived from benzene, naphthalene, biphenyl, anthracene, pyrene, perylene, diphenyl ether, diphenylmethane, diphenyldimethylmethane, bisphenone, diphenyl sulfone, quinoline, pyridine, bipyridine, pyridazine, pyrimidine, pyrazine, triazine, tetrazine, pyrrole, pyrazole, anthracene, benzopyrrole, benzotriazole, benzoxathiadiazole, benzoxadiazole, benzopyridine, benzopyrazine, benzopyrazidine, benzopyrimidine, benzopyrazine, benzotriazine, indolizine, quinolizine, pyridopyridine, imidazopyrimidine, pyrazinopyrimidine, carbazole, acridine, phenazine, benzoquinoline, phenoxazine, phenothiazine, acridizine, benzopteridine, phenanthroline and phenanthrene.

Particularly suitable aromatic phosphonic acid moieties $R^2$ are of the formula (XIII)

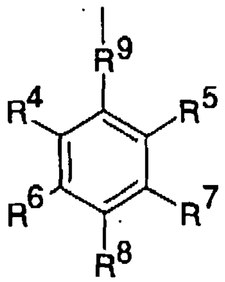

(XIII)

wherein $R^4$, $R^5$, $R^6$, $R^7$, and $R^8$ are identical or different and are each hydrogen, a halogen atom, a group having 1 to 40 carbon atoms, or a group comprising at least one phosphonic acid moiety, provided that at least one of the rests $R^4$, $R^5$, $R^6$ and $R^7$, and $R^8$ is a group comprising at least one phosphonic acid moiety, and $R^9$ is a bond, an alkylene group, an alkenyl group, an alkinyl group or a cycloalkylene group, very preferably a bond.

Preferred halogens are fluorine, chlorine, bromine, in particular fluorine and chlorine, especially fluorine.

Preferred groups having 1 to 40 carbon atoms comprise $C_{1-20}$-alkyl groups, especially methyl, ethyl, n- or i-propyl, t-butyl, pentyl, hexyl, heptyl, octyl, nonyl, decyl, undecyl and dedecyl groups and $C_{5-20}$-aryl groups, especially phenyl and naphthyl groups. The alkyl groups and the aromatic groups may be substituted.

Preferred groups comprising at least one phosphonic acid moiety are groups of the formula (XIV)

$$-R_o-P(O)(OH)_2 \qquad (XIV)$$

wherein R is a group having 1 to 40 carbon atoms, preferably 1 to 20 carbon atoms, very preferably 1 to 10 carbon atoms, and wherein o is a number within the range of 0 to 1, preferably 0. In that context, alkylene groups and cycloalkylene

groups are particularly preferred. Thereby said groups suitably comprise 1 to 10 carbon atoms, especially 1 to 6 carbon atoms, especially methylene, ethylene, propylene and butylene.

The number and the position of the groups comprising at least one phosphonic acid moiety are not limited. However, it is particular preferred that $R^8$ comprises at least one phosphonic acid moiety. Furthermore, it is particular preferred that $R^6$ and/or $R^7$, very preferably $R^6$ and $R^7$, comprises at least one phosphonic acid moiety.

Preferred alkylene groups or cycloalkylene groups $R^9$ comprise 1 to 10 carbon atoms, especially 1 to 6 carbon atoms, especially methylene, ethylene, propylene and butylene.

The substituents $R^3$ are identical or different and are each hydrogen, a halogen atom, or a group having 1 to 60 carbon atoms, preferably 1 to 40 carbon atoms, more preferably 1 to 20 carbon atoms, most preferably 1 to 10 carbon atoms.

Preferred halogens are fluorine, chlorine, bromine, in particular fluorine and chlorine, especially fluorine.

Preferred groups having 1 to 60 carbon atoms comprise alkyl groups, cycloalkyl groups and aryl groups, which preferably do not comprise a phosphonic acid moiety, but which may by substituted otherwise.

Particularly suitable alkyl groups are derived from $C_{1-10}$ alkyl groups, especially from methyl, ethyl, propyl, butyl, pentyl, and/or hexyl, which may also be substituted.

Particularly suitable cycloalkyl groups are derived from cyclopentyl, and/or cyclohexyl, which may also be substituted.

Preferred aromatic or heteroaromatic groups are derived from benzene, naphthalene, biphenyl, anthracene, pyrene, perylene, diphenyl ether, diphenylmethane, diphenyldimethylmethane, bisphenone, diphenyl sulfone, quinoline, pyridine, bipyridine, pyridazine, pyrimidine, pyrazine, triazine, tetrazine, pyrrole, pyrazole, anthracene, benzopyrrole, benzotriazole, benzoxathiadiazole, benzoxadiazole, benzopyridine, benzopyrazine, benzopyrazidine, benzopyrimidine, benzopyrazine, benzotriazine, indolizine, quinolizine, pyridopyridine, imidazopyrimidine, pyrazinopyrimidine, carbazole, acridine, phenazine, benzoquinoline, phenoxazine, phenothiazine, acridizine, benzopteridine, phenanthroline and phenanthrene.

Particularly suitable aromatic groups are of the formula (XV)

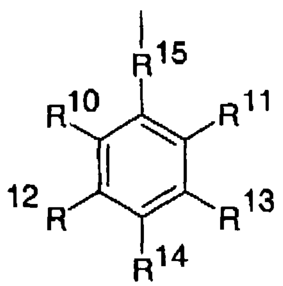

(XV)

wherein $R^{10}$, $R^{11}$, $R^{12}$, $R^{13}$, and $R^{14}$ are identical or different and are each hydrogen, a halogen atom, or a group having 1 to 40 carbon atoms, and $R^{15}$ is a bond, a alkylene group, an alkenyl group, an alkinyl group or a cycloalkylene group, very preferably a bond.

Preferred halogens are fluorine, chlorine, bromine, in particular fluorine and chlorine, especially fluorine.

Preferred groups having 1 to 40 carbon atoms comprise $C_{1-20}$-alkyl groups, especially methyl, ethyl, n- or i-propyl, t-butyl, pentyl, hexyl, heptyl, octyl, nonyl, decyl, undecyl and dedecyl groups and $C_{5-20}$-aryl groups, especially phenyl and naphthyl groups. The alkyl groups and the aromatic groups may be substituted.

Preferred alkylene groups or cycloalkylene groups $R^{15}$ comprise 1 to 10 carbon atoms, especially 1 to 6 carbon atoms, especially methylene, ethylene, propylene and butylene.

m is a number within the range 3 to 60, preferably within the range 4 to 25, very preferably within the range 5 to 15, most preferably within the range 6 to 10.

n is a number within the range 0 to 57, preferably within the range 1 to 40, very preferably within the range 2 to 25, most preferably within the range 3 to 20.

The sum m+n is within the range of 3 to 60, preferably within the range 4 to 50, very preferably within the range 5 to 40, most preferably within the range 6 to 30.

Especially preferred compounds of the formula (I) are

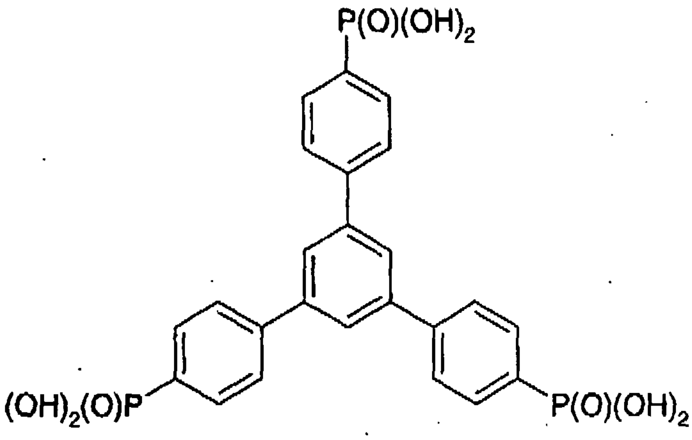

(XVI)

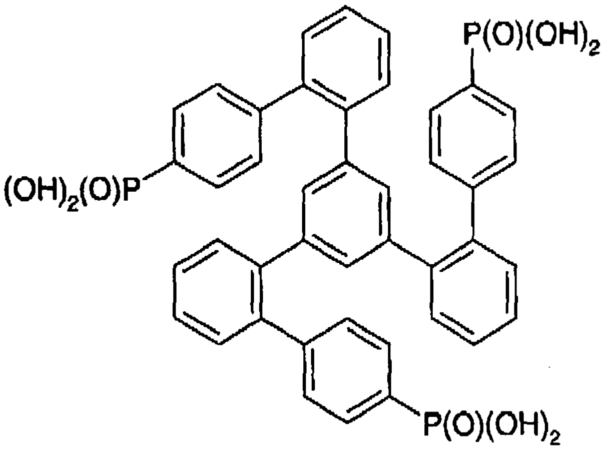

(XVII)

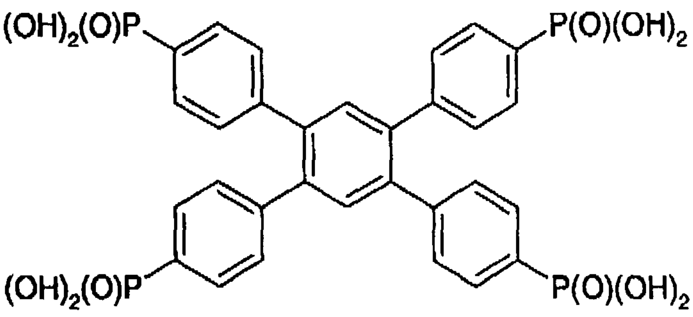

(XVIII)

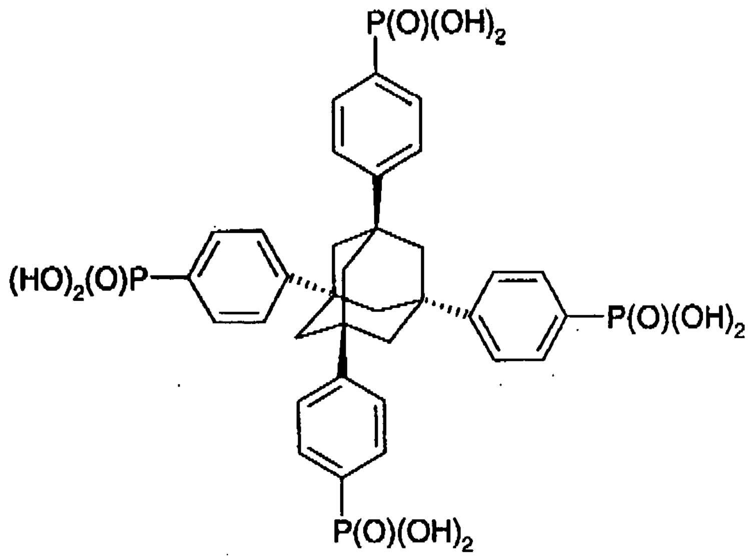

(XIX)

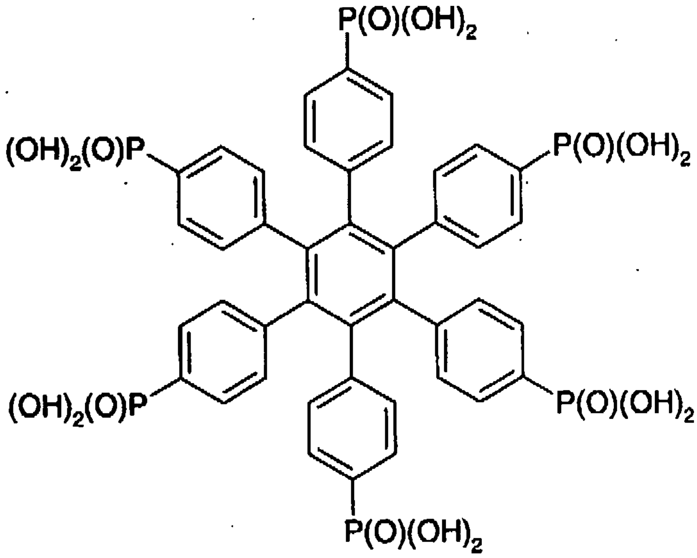

(XX)

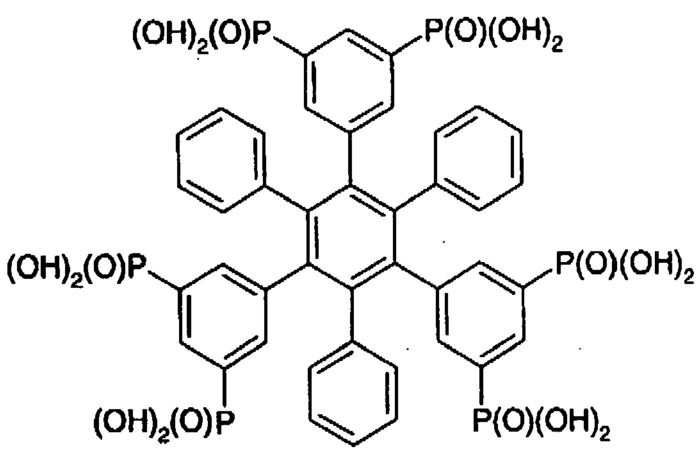

(XXI)

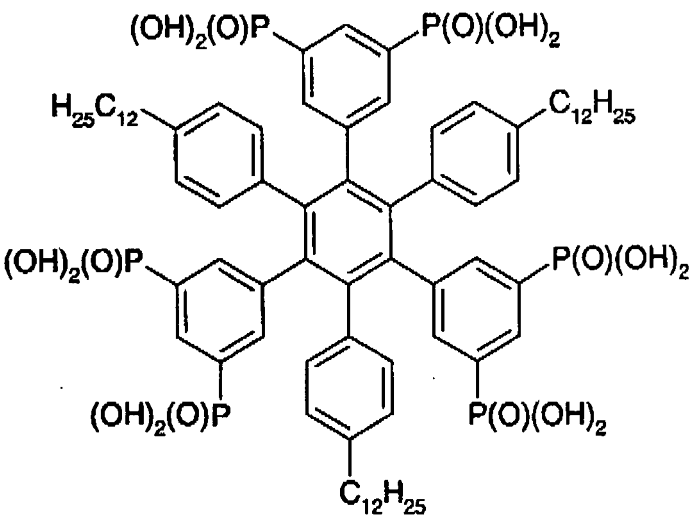

(XXII)

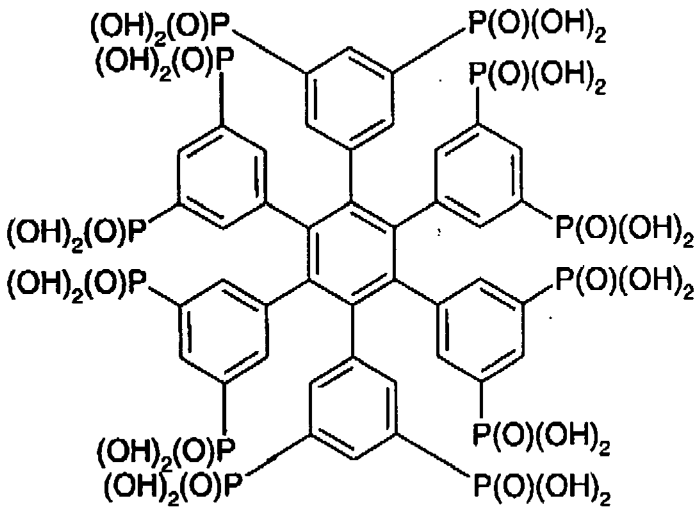

(XXIII)

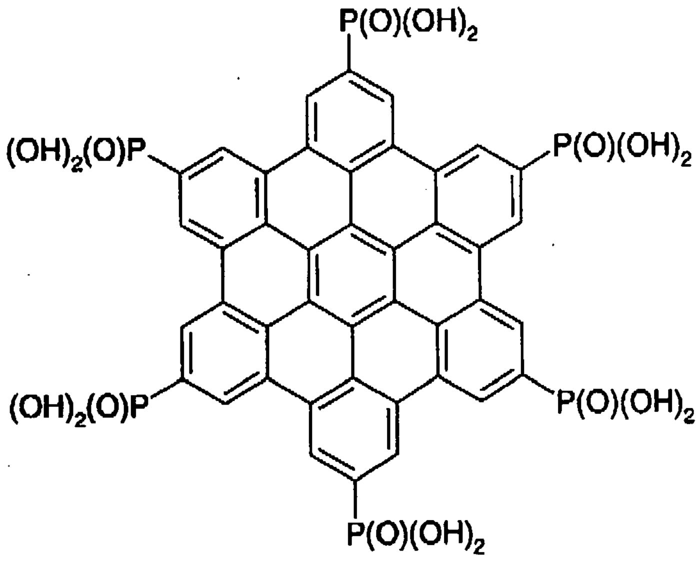

(XIV)

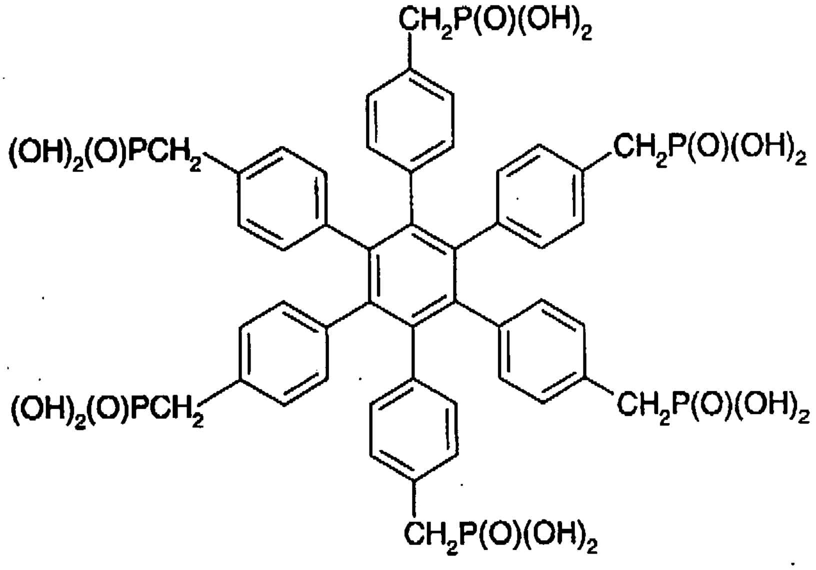

(XV)

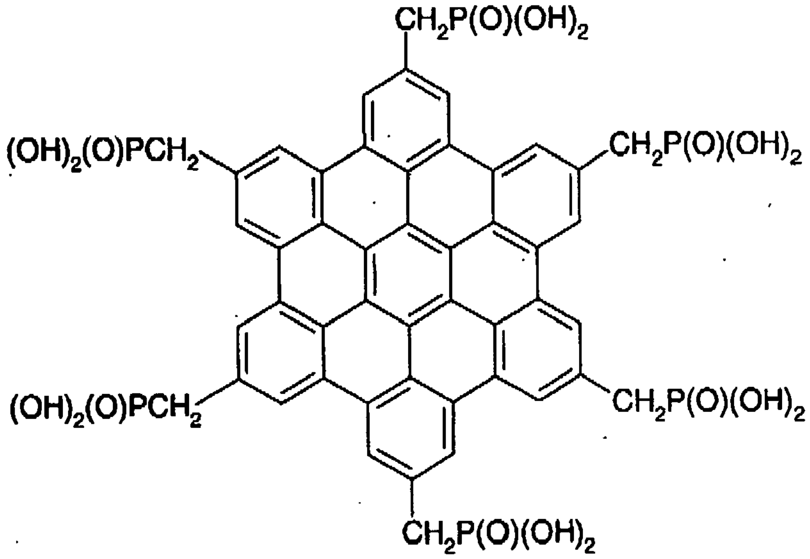

(XVI)

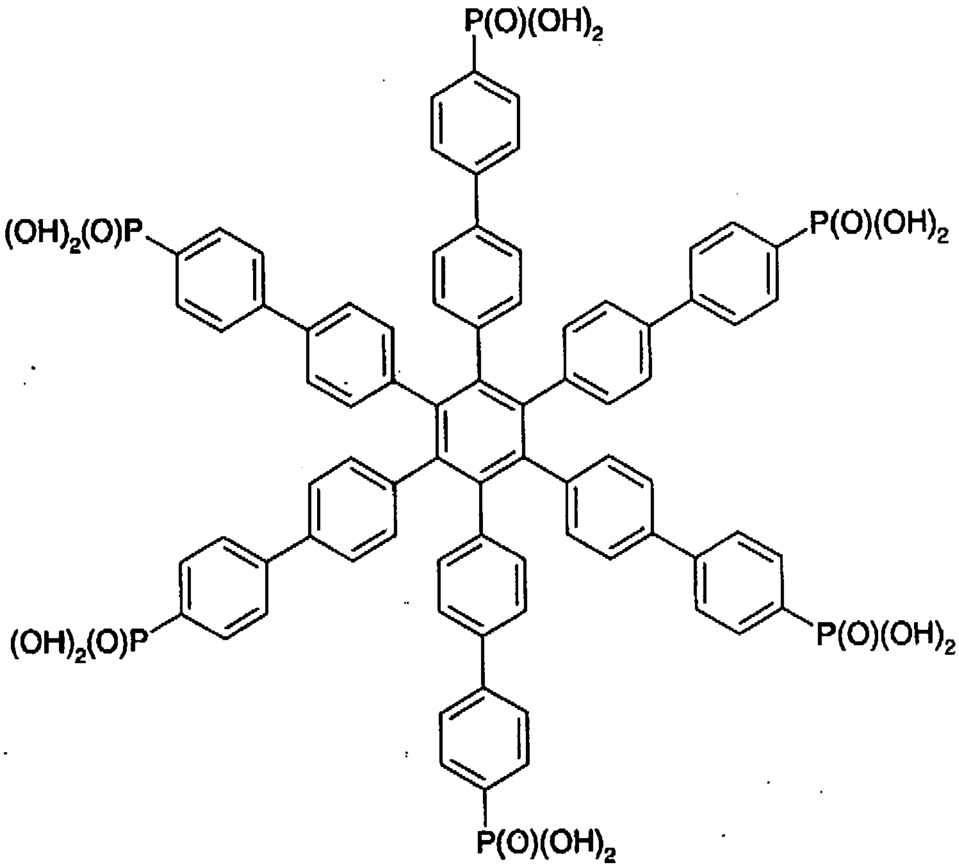

(XVII)

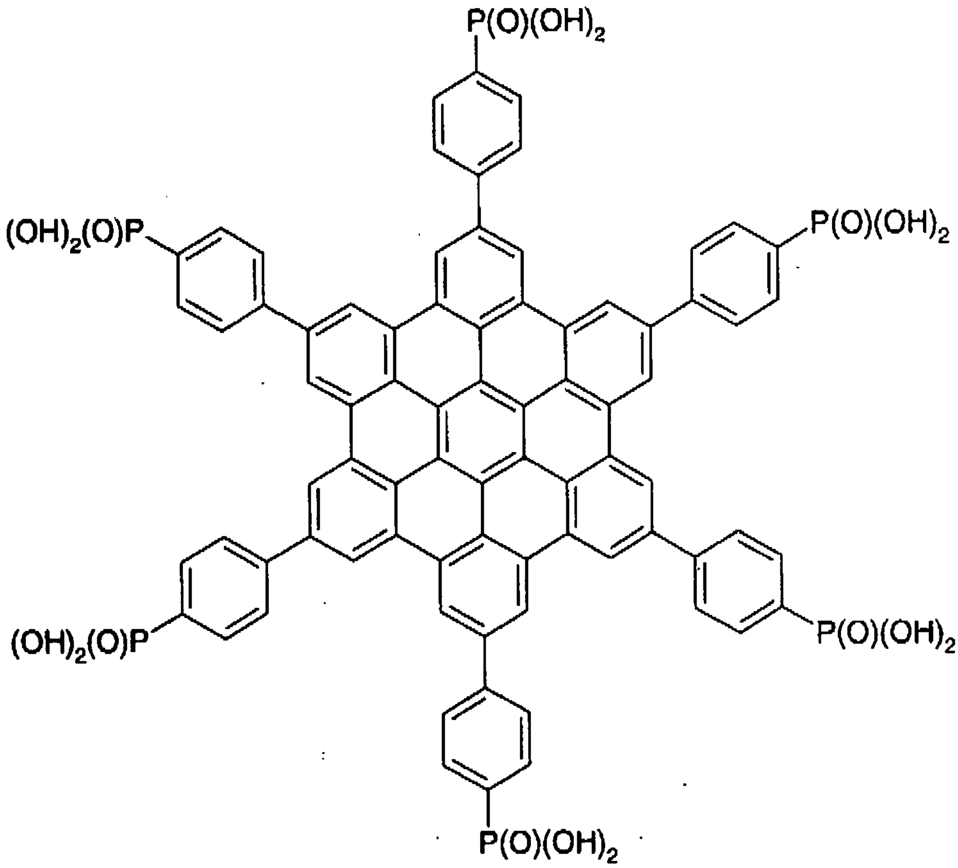

(XVIII)

The use of the compound (XX) is particularly favourable in the present invention.

Compounds having a statistical substitution pattern are also within the scope of the present invention, provided that the number of aromatic moieties and the number of phosphonic acid groups are met.

The electron conductivity of the compound of the present invention is preferably at least 1 S/cm, very preferably at least 5 S/cm, in particular at least 10 S/cm, most preferably at least 25 S/cm. For the purposes of the present invention, said electron conductivity is preferably measured in the absence of water at 25°C. Further information regarding the measurement of said conductivity can be found in J. R. Macdonald, Impedance Spectroscopy, Emphasizing Solid Materials and Systems, John Wiley and Sons, New York, 1987; and in Kremer F., Schonhals A., Luck W. Broadband Dielectric Spectroscopy. - Springer-Verlag, 2002.

In that context, the use of compounds have fused aromatic moieties has proven of particular advantage, wherein it is preferred that at least 5, preferably at least 6, more preferably at least 7, even more preferably at least 8, suitably at least 9, in particular at least 10, very preferably at least 11, especially at least 12, most preferably at least 13 rings are fused together.

The water solubility of the compound of the present invention is preferably at most 1 g/l, very preferably at most 500 mg/l, in particular at most 100 mg/l. For the purposes of the present invention, said water solubility is preferably measured at 25°C.

The synthesis of the compounds of the present invention can be performed in a routine manner. Valuable information can be found in standard organic textbooks, e.g. Organikum, 17th edition, VEB Deutscher Verlag der Wissenschaften, Berlin 1988; J. March, Advanced Organic Chemistry, 3rd Edition, John Wiley & Sons 1985; and Houben-Weyl, Methods of Molecular Transformation, Science of Synthesis, Volume 31 b, 1939 - 1962, Thieme, 2007..

In addition to the compound having the formula (I), the material of the present invention comprises crystal water, i.e. water that is present in a crystal area but is not covalently bonded to a host molecule or ion. The amount of the crystal water is preferably within the range of 0.1 to 100 molecules of crystal water, suitably within the range of 0.2 to 25 molecules of crystal water, more preferably within the range of 0.5 to 10 molecules of crystal water, most preferably within the range of >1 to 5 molecules of crystal water per molecule having the formula (I).

Said crystal water can be introduced in the crystal regions in a routine manner, e. g. by treating the compound in an atmosphere having a high humidity, preferably above 50% RH, suitably at room temperature (25°C).

The material of the present invention has a degree of crystallinity of at least 30%, preferably of at least 50%, more preferably of at least 70%, most preferably of at least 90%. Said degree of crystallinity can be determined in a routine manner and is preferably measured at room temperature.

A particular powerful method of determining the degree of crystallinity is wide-angle X-ray scattering (WAXS). A typical WAXS curve (intensity of X-ray scattering vs. diffraction angle 2θ) shows sharp peaks due to scattering of the crystalline regions and optionally a broad underlining hump due to scattering of non-crystalline areas. The degree of crystallinity can be determined from the relative areas under the crystalline peaks and the amorphous hump.

The degree of crystallinity $x_c$ is then given by

$$x_c = A_c / (A_a + A_c)$$

where $A_a$ is the area under the amorphous hump and $A_c$ is the area remaining under the crystalline peaks.

The melting point of the compound of the present invention is preferably at least 100°C, more preferably at least 125°C. It is preferably determined by DSC (Differential scanning calorimetry), preferably using a heating rate of 1 K/min.

The thermal stability of the compound of the present invention is preferably at least 200°C, more preferably at least 250°C, in particular at least 300°C, especially at least 350°C, most preferably at least 400°C. It is preferably determined by DSC (Differential scanning calorimetry), preferably using a heating rate of 1 K/min, wherein a mass loss of up to 5 percent by weight, based on the initial mass of the compound in addition to the loss of crystal water and/or absorbed water is permitted.

The phosphonic acid moieties of the compound of the present invention preferably form a 3 dimensional lattice, i.e. the atoms of the phosphonic acid moieties form a regular 3 dimensional arrays of atoms, which is repeated in the structure.

It is believed that the materials of the present invention can be seen as *inverse proton-conducting cables* due to a columnar structure containing a proton-conducting periphery and an insulating core. Proton conductivity through the material is possible on the one side due to the amphoteric character of the phosphonic acid groups and their preorganization and on the other side to the pathways preferably resulting from the self-assembled aromates. Moreover, proton transport is assisted by the presence of immobilized water in the crystal hydrate areas.

In contrast to state-of-the-art polymers and inorganic crystals, the materials of the present invention provide high and furthermore constant proton conductivity, satisfying the requirements for new separator materials in FC systems. These low molecular weight organic crystals are therefore an alternative material to be used as PEM in the case of automotive applications. However, the teaching of the present invention not bond to this theory.

The compound of the present invention and the material of the present invention are preferably used as a polyelectrolyte and/or as an additive for fuel cell applications, especially for electrodes and/or membrane-electrode units. They are preferably used in connection with a polymer electrolyte membrane comprising at least one acid wherein the acid may be covalently bound to the polymer. These membranes can, amongst other methods, be produced by swelling flat materials, for example a polymer film, with a fluid comprising acidic compounds, or by manufacturing a mixture of polymers and acidic compounds and subsequently forming a membrane by forming a flat structure and subsequent solidification in order to form a membrane. Particularly suitable membranes usable in the present context are described in WO02088219. The disclosure of said document including the preferred embodiments described therein is enclosed herein by reference.

For further information on fuel cells and membrane-electrode units, reference may be made to the specialist literature, in particular the patents US-A-4,191,618, US-A-4,212,714 and US-A-4,333,805.

The disclosure in the abovementioned references is hereby incorporated by reference into the present description.

The following experimental part further explains the teaching of the present invention. However, the scope of protection is not limited to the specific embodiments discussed.

I. General remark

Unless otherwise noted, all starting materials were purchased from Aldrich, Acros and used as received without further purification. $^{1}H$ NMR, $^{13}C$ NMR and $^{31}P$ NMR spectra were recorded in deuterated solvents on a Bruker DPX 250, Bruker DPX 300 and Bruker DRX 500. FD mass measurements were carried out on a VG instruments ZAB 2-SE-FPD. TGA and DSC data were acquired with Mettler instruments (TGA/SDTA 851e and DSC 822e) at a heating rate of 10 and 1 K/min respectively. The volatile products of the TGA experiments were analyzed at a heating rate of 10 K/min under Helium atmosphere using a Pfeiffer ThermoStar mass spectrometer.

II. Figures

The following figures explain different aspects of the present invention, these figures intended to deepen the understanding of the present invention; however, this should not constitute a limitation.

The figures show:

Fig. 1 TGA curve. The upper curve represents the TGA of *p*-6PA-HPB recorded at 10 K/min under He and the lower one the $H_2O$ intensity recorded during the TGA-MS measurement,

Fig. 2 X-ray diffractogramm of *p*-6PA-HPB recorded at 33 % RH and at 26, 100 and 200 °C (bottom up),

Fig. 3 2D WAXS pattern and schematic representation of the organization within p-6PA-HPB (A: 0.6 nm, Stacking distance of molecules; B: 1.4 nm, Intercolumnar distance),

Fig. 4 Water adsorption (•) and desorption (o) isotherms at RT (Lambda: number of $H_2O$ molecules per p-6PA-HPB),

Fig. 5 Plots of the proton conductivity vs. temperature under 1 bar $H_2O$ atmosphere for *p*-6PA-HPB (•) and Notion® 117 (■),

Fig. 6 Plot of the proton conductivity of *p*-6PA-HPB vs. RH at RT.

III. Synthesis and Spectroscopic Characterization

III.A Synthesis of (P,P'-[1,1':4',1"-terphenyl]-4,4"-diyl)bisphosphonic acid **C**

III.A.1 Synthesis of 4,4'-Diiodo-p-terphonyl 2

A mixture of p-terphenyl (4.65 g, 20 mmol), iodine (5.076 g, 20 mmol) and $H_5IO_6$ (1.86 g, 8 mmol) was added to a solvent mixture of $AcOH/H_2O/H_2SO_4$ (10:2:0.3 vol. (121.95/24.39/3.66 mL), 75 mL) and heated to 100 °C with stirring. A fresh colored precipitated gradually formed and thickened and later more of the same solvent mixture was added (38 mL) to maintain efficient stirring. The reaction mixture was heated for 24 h and subsequently cooled and filtered. The resulting light-tan product was washed with 10 % aq sodium thiosulfate (500 mL) and then dried. The crude product was purified by refluxing with two separate portions of toluene (2 x 250 mL) each for 15 min. The dissolved product crystallized from the hot extracts in white flaky crystals. The undissolved fraction was then extracted in a Soxhlet apparatus for 48 h using toluene (150 mL) and upon cooling yielded more of the same crystalline product. Yield: 60 %. MS (70 eV): m/z = 481.903. $^1$H NMR (250 MHz, $CDCl_3$, δ): 7.37 (4H, m), 7.63 (4H, s), 7.79 (4H, m). $^{13}$C NMR (75 MHz, DCM, δ) 125.8 - 127.8. IR: v = 3090, 3060 (CH), 1580, 1470, 1380 (C=C arom), 1130, 1060, 995, 796 (CH) $cm^{-1}$.

III.A.2 Synthesis of 4,4'-Diethylphosphonato-p-terphonyl 3

2 (0.48 g, 1 mmol) was dissolved in anhydrous toluene (100 mL) and stirred under argon until it is dissolved. Diethyl phosphite (0.56 g, 0.53 mL, 4 mmol) and triethylamine (0.41 g, 0.56 mL, 4 mmol) were added with a syringe, and the mixture is stirred for an additional 10 min; finally with a high argon purge tetrakis(triphenylphosphine)palladium (0.2918 g, 0.25 mmol) was added and the mixture heated at 80-90 °C during the night (12 h). After cooling to room temperature diethyl ether was added to the reaction mixture to precipitate the triethylamine hydroiodide, which was removed by filtration. The filtrate was evaporated to give a yellowish oil. The crude product was purified by column chromatography on silica gel with ethyl acetate as eluent. Yield: 96.7 %. MS (70 eV): m/z = 366.1. $^1$H NMR (250 MHz, DCM, δ): 1.31 (12H, m, 4 x $CH_3$); 4.12 (8H, m, 4 x $OCH_2$); 7.75 (12H, m, rings). $^{13}$C NMR (75 MHz, DCM, δ) 62.83 (2C, m, 2 x $OCH^2$), 122 -135. $^{31}$P NMR (200 MHz, $CDCl_3$, δ): 18.75 (s).

III.A.3 Synthesis of (PP'-[1,1':4',1"-terphenyl]-4,4"-diyl)bisphosphonic acid

3 (0.486 g, 0.967 mmol) was treated with TMS-Br (1.209 g, 7.74 mmol) in 150 mL of DCM for 48 h (first step). Then, DCM was evaporated and the product of the first step dried under vacuum. The product of the first step was treated with MeOH (200 mL) for another 48 h. The final product was washed with water several times (second step).

Yield first step: 68 %. Yield second step: 72 %. $^1H$ NMR (250 MHz, DMSO, δ): 7.80 (16H, m, rings). $^{13}C$ NMR (75 MHz, DMSO, δ): 126.26 (d, J = 13.89 Hz); 127.35 (d, J = 13.41 Hz); 131.31 (d, J = 9.28 Hz); 138.85 (s); 141.67 (s).

III.B Synthesis of 1,2,3,4,5-Tetrakis(*p*-phosphonato)benzene **XVIII**

III.B.1 Synthesis of 1,2,4,5-tetrakis(4-TMSphenyl)benzene 2

A mixture of **1** (0,79 g, 1.89 mmol), palladium (II) acetate (0.022 g, 0.094mmol), tri(*o*-totyl)phosphine (0.058 g, 0.19 mmol), phenylboronic acid (2.19 g, 11.32 mmol), toluene (60 mL), methanol (20 mL), and 2 M $K_2CO_3$ (16 mL) was heated at 75 °C for overnight under a Argon atmosphere while maintaining with good stirring (tri (o-tolyl)phosphine was added once all the chemicals were in the flask under high Ar purge). After the reaction mixture was cooled to room temperature, it was poured into water and extracted with dichloromethane (3 x 100 mL). The combined organic layer was dried with anhydrous $Na_2SO_4$ and evaporated to dryness. The crude product was further purified by column chromatography in petroleum ether to afford 0.52 g of a white powder (41.5 %).

III.B.2 Synthesis of 1,2,4,5-tetrakis(p-iodophenyl)benzene **3**

1.34 g of **2** (2.0 mmol) was dissolved in 130 ml $CHCl_3$, and the solution was t degassed by bubbling through argon for 20 min. Then 9 ml iodine monochloride (1.0 M in $CH_2Cl_2$) were added slowly. After stirring for 1 h, the reaction was quenched by adding aqueous sodium disulfite. The organic layer was washed by water three times and dried over $MgSO_4$. The solution was concentrated to 10 ml and then 100 ml MeOH was added to precipitate the product. The white solid was collected and dried under vacuum to afford 1.432 g product (80.8 %).

III.B.3 Synthesis of 1,2,3,4,5-Tetrakis(*p*-diethylphosphonato)benzene

**3** (1.00 g, 1.129 mmol) is dissolved in dry toluene (60 mL) and stirred under argon until it is dissolved. Diethyl phosphite (3.74 g, 3.67 mL, 27.086 mmol) and triethylamine (2.738 g, 3.77 mL, 27.086 mmol) are added with a syringe, and the mixture is stirred for an additional 10 min; finally with a high argon purge tetrakis(triphenylphosphine)palladium (626 mg, 0.5417 mmol) is added and the mixture heated at 70 °C overnight. The reaction is followed by FD-MS. After cooling to room temperature diethyl ether was added to the reaction mixture to precipitate the triethylamine hydroiodide, which was removed by filtration. The filtrate was evaporated. The crude product was purified by column chromatography on silica gel with ethyl acetate/methanol (8/2) as eluent.

III.B.4 Synthesis of 1,2,3,4,5-Tetrakis(p-phosphonato)benzene **5**

The hydrolysis was done like before (see: (P,P'-[1,1':4',1"-terphenyl]-4,4"-diyl)bisphosphonic acid **4**). The esther was first treated with TMS-Br in DCM and then with MeOH.

III.C_Synthesis of 1,3,5-Tris(2'-biphosphonatophenyl)ylbenzene **XVII**

III.C.1 Synthesis of 1,3,5-Tris[4"-(trimethylsityl)-2'-biphenyl]ylbenzene **3**

The synthesis of **2** was previously described (Feng, X.; Wu, J.; Enkelmann, V.; Mullen, K. Org. Lett. 2006, 8, 1145 - 1148).
A mixture of **2** (1.00 g, 1.84 mmol), palladium (II) acetate (15.74 mg, 0.0687 mmol), tri(*o*-totyl)phosphine (42.68 mg, 0.139 mmol), *p*-TMSphenylboronic acid (1.61 g, 8.27 mmol), toluene (120 mL), methanol (40 mL), and 2 M $K_2CO_3$ (32 mL) was heated at 75 °C for overnight under a Argon atmosphere while maintaining with good stirring (tri(*o*-tolyl)phosphine was added once all the chemicals were in the flask under high Ar purge). After the reaction mixture was cooled to room temperature, it was poured into water and extracted with dichloromethane (3 x 100 mL). The combined organic layer was dried with anhydrous $Na_2SO_4$ and evaporated to dryness. The crude product was further purified by column chromatography in petroleum ether to afford 1.33 g of a white powder (96 %).

III.C.2 Synthesis of 1,3,5-Tris(2'-biiodophenyl)ylbenzene **4**

1 g of **3** (1.4898 mmol) was dissolved in 130 ml $CHCl_3$, then degassed by bubbling through argon for 20 min, then 6.7 ml iodine monochloride (1.0 M in $CH_2Cl_2$) were added slowly. After stirring for 1h, the reaction was quenched by adding aqueous sodium disulfite. The organic layer was washed by water three times and dried over $MgSO_4$. The solution was concentrated to 10 ml and then 100 ml MeOH was added to precipitate the product. The white solid was

collected and dried under vacuum to afford 564 mg product (93%).

III.C.3 Synthesis of 1,3,5-Tris(2'-bidiethylphosphonatophenyl)ylbenzene **5**

**4** (800 mg, 0.876 mmol) is dissolved in dry toluene (50 mL) and stirred under argon until it is dissolved. Diethyl phosphite (2.176 g, 2.0312 mL, 15.77 mmol) and triethylamine (1.554 g, 2.20 mL, 15.77 mmol) are added with a syringe, and the mixture is stirred for an additional 10 min; finally with a high argon purge tetrakis(triphenylphosphine)palladium (182.2 mg, 0.158 mmol) is added and the mixture heated at 70 °C overnight. The reaction is followed by FD-MS. After cooling to room temperature diethyl ether was added to the reaction mixture to precipitate the triethylamine hydroiodide, which was removed by filtration. The filtrate was evaporated. The crude product was purified by column chromatography on silica gel with ethyl acetate/methanol (8/2) as eluent and by GPC.

III.C.4 Synthesis of 1,3,5-Tris(2'-biphosphonatophenyl)ylbenzene

The hydrolysis was done like before (see: (P,P'-[1,1':4',1"-terphenyl]-4,4"-diyl)bisphosphonic acid **4**). The esther was first treated with TMS-Br in DCM and then with MeOH.

III.D Hexaquis(p-phosphonatophenyl)benzene (p-6PA-HPB; **XX**)

p-6PA-HPB was synthesized via a three step reaction. Its molecular structure consists of a carbon-rich non-planar hydrophobic core and a hydrophilic periphery with six phosphonic acid functions, i.e. twelve potentially mobile protons.

III.D.1 Synthesis of bis(4-diethylphosphonatophenyl)acetylene (a)

Bis(4-bromophenylacetylene) (1.384 g, 4 mmol) was dissolved in anhydrous toluene (85 ml) and stirred under argon until it was dissolved. Diethyl phosphite (6.31 ml, 48 mmol) and triethylamine (4.92 ml, 48 mmol) were added with a syringe, and the mixture was stirred for an additional 10 min; finally tetrakis(triphenylphosphine)palladium (0) (1.16 g, 1 mmol) was added with a high argon purge and the mixture heated at 75 °C overnight. After cooling to room temperature, diethyl ether was added to the reaction mixture to precipitate the triethylamine hydroiodide, which was removed by filtration. The filtrate was evaporated to give a yellowish oil. The crude product was purified by column chromatography on silica gel (ethyl acetate/methanol = 10/1). 1.47 g (82 %) of a white solid was obtained.
MS (70 eV): *m*/*z*= 450.5, calcd.: 450.4 (M+).
$^1$H NMR (250 MHz, $CD_2Cl_2$): δ ppm 7.85 - 7.71 (m, 4H), 7.69 - 7.54 (m, 4H), 4.21 - 3.91 (m, 8H), 1.36 - 1.20 (m, 12H).
$^{13}$C NMR (75 MHz, $CD_2Cl_2$): δ ppm 132.26, 132.15, 132.13, 131.95, 130.98, 128.48, 127.19, 127.14, 91.17, 62.77, 62.70, 16.70, 16.62.
$^{31}$P NMR (200 MHz, $CD_2Cl_2$): δ ppm 15.20.

III.D.2 Synthesis of hexaquis(*p*-diethylphosphonatophenyl)benzene (b)

Bis(4-diethylphosphonatophenyl)acetylene (2.86 g, 6.341 mmol) and dioxane (39 ml) were introduced in the flask and the solution was degassed with Ar during 10 min. The catalyst (228.2 mg, 0.6341 mmol) was introduced and the mixture heated at 125 °C during the night under Ar atmosphere. The solvent was evaporated under vacuum. The dark blue oil was purified by column chromatography (ethyl acetate/methanol = 7/3) to give 1.96 g (22 %) of an orange-like solid.
MS (70 eV): *m*/*z*= 1352.0, calcd.: 1351.20 (M+).
$^1$H NMR (500 MHz, $CD_2Cl_2$): δ ppm 7.29 (dd, *J* = 8.2, 13.0, 0H), 6.98 - 6.91 (m, 0H). 3.93 - 3.77 (m, 1H), 1.16 (t, J = 7.1, 2H).
$^{13}$C NMR (125 MHz, $CD_2Cl_2$): δ ppm 144.10, 140.26, 131.81, 131.69, 131.03, 130.95, 127.80, 126.31, 62.47, 62.42, 16.64, 16.60.
$^{31}$P NMR (200 MHz, $CD_2Cl_2$): δ ppm 17.31.

III.D.3 Synthesis of hexaquis(p-phosphonatophenyl)benzene (c)

Hexaquis(*p*-diethylphpsphonatophenyl)benzene (1.92 g, 1.418 mmol) was treated with bromotrimethylsilane (2.605 g, 2.364 mmol) in 150 ml of DCM for 48 h. Then, DCM was evaporated and the product of the first step dried under vacuum. The product of the first step was treated with MeOH (100 ml) for another 48 h. 1.4 g (97 % yield) of a yellowish powder were obtained.
$^1$H NMR (500 MHz, DMSO): δ ppm 7.25 - 7.15 (m, 12H), 7.01 (dd, *J* = 3.4, 8.2, 12H).

$^{13}C$ NMR (125 MHz, DMSO): δ ppm 141.50, 139.11, 131.67, 130.06, 129.94, 128.54, 128.46, $^{31}P$ NMR (200 MHz, DMSO): δ ppm 13.24.
Mp: 329 °C.

III.E known substances

The compounds **XVI** and **XIX** were synthesized in accordance with J. Beckmann, R. Rüttinger, T. Schwich, Crystal Growth & Design 2008, 8(9), 3271-3276; and M. V. Vasylyev, D. Astruc, R. Neumann, Adv. Synth. Catal. 2005, 347, 39-44, respectively.

IV. Thermal analysis

The result of the TGA measurement of p-6PA-HPB is shown in Fig. 1.

V. Water uptake

In order to determine the amount of water adsorption, the sample was stored under an atmosphere of fixed humidity and temperature for 3 days. The humidity was set by saturated salt solutions according to literature data (L. Greenspan, J. Res. Natl. Bur. Stand., A Phys. Chem. 1976, 81A, 89 - 96.). Water desorption was determined by storing the samples under 98 % RH for 3 weeks and then transferring them to atmospheres of lower fixed humidity for 3 days at constant temperature. Water sorption was measured on a Mettler MX5 microbalance until constant weight was obtained; the water sorption was calculated from the following equation:

$$\textit{Water sorption} = \frac{W_{wet} - W_{dry}}{W_{dry}} \times 100$$

*p*-6PA-HPB possesses the characteristics of a hydrated crystal. Thermogravimetric analysis combined with mass ion spectroscopy indicates that 8 wt % of water is only released at temperatures well above its boiling point (see Fig. 1). Moreover, water sorption and desorption isotherms at RT (Fig. 4) indicate the stepwise hydration/dehydration and hysteresis characteristics of crystal hydrates (R. Büll, Angew. Chem. 1936, 49, 145 - 158). Interestingly, in the case of the above described organic crystal, these steps are close to integer multiples of water molecules per *p*-6PA-HPB. The pronounced hysteresis isotherm predicts that a considerable amount of bonded water remains in the crystalline material.

VI. Proton conductivity

Through-plane as well as in-plane proton conductivity was measured by dielectric spectroscopy in a two-electrode geometry using an SI 1250 impedance/gain-phase analyzer. A 100 mg uniaxially pressed pellet of 5.5 mm diameter and 2.1 mm thickness was used. Conductivity measurements in pure water vapor ($p(H_2O) = 10^5$ Pa) above 100 °C were carried out in a double-wall temperature-controlled glass chamber with a water inlet and outlet, both heated by a small furnace. To constantly flush the sample with pure $H_2O$ atmosphere, water was evaporated, the gas subsequently adjusted to the desired temperature and piped through the heated inlet of the glass oven. A pressure of $10^5$ Pa adapts itself due to the small outlet of the oven against ambient. It should be noted that the RH, set by a $H_2O$ atmosphere at $10^5$ Pa, decreases with increasing temperature according to the table of vapor pressure. 120 °C corresponds to a RH of - 50 %, at 150 °C the RH is close to 20 %. In the case of proton conductivity measurements as a function of RH, the humidity of air during data acquisition was set by mixing dry nitrogen with humidity saturated nitrogen. The RH was measured using a Sensiron SHT15 sensor.

Nafion® 117 membrane was pre-treated by boiling in deionized water for 1h, boiling in 3 % $H_2O_2$ for 1 h, rinsing in water repeatedly, boiling in 0.5 M $H_2SO_4$ for 1 h and rinsing again in water. The membrane was stored in deionized water.

Proton conductivity studies have been carried out above 100 °C under 1 bar $H_2O$ atmosphere. These investigations show high proton conductivity values (Fig. 5), especially when compared to inorganic hydrates or phosphonic acid containing polymers (a) S. Hara, S. Takano, M. Miyayama, J. Phys. Chem. B 2004, 108, 5634 - 5639; b) A. Kaltbeitzel, S. Schauff, H. Steininger, B. Bingöl, G. Brunklaus, W. H. Meyer, H. W. Spiess, Solid State Ionics 2007,178, 469 - 474). Contrary to Nafion® 117, *p*-6PA-HPB has an almost constant proton conductivity ($3.2 . 10^{-3}$ $S.cm^{-1}$) with increasing temperature. *p*-6PA-HPB exhibits higher values of proton conductivity than Nafion® 117 above 160°C. Nafion® 117 suffers from the loss of water in the proton conducting channels (*vehicle mechanism*; a) K. D. Kreuer, J. Membr. Sci.

2001, 185, 29 - 39; b) K. D. Kreuer, S. J. Paddison, E. Spohr, M. Schuster, Chem. Rev. 2004, 104, 4637 - 4678) whereas the step-like water desorption isotherm of *p*-6PA-HPB is the most likely reason for the flat temperature response of the crystalline material. The RH, set by a $H_2O$ atmosphere at 1 bar, decreases with increasing temperature according to the table of vapor pressure. Proton conductivity measurements were realized under 1 bar $H_2O$ atmosphere above 100 °C, which corresponds to a RH lower than 50 %. As can be seen in the desorption isotherm, above 50 % RH *p*-6PA-HPB accommodates about 2 water molecules in its crystalline structure. It is therefore assumed that these immobilized water molecules act as proton donor and acceptor instead of being diffusible carrier molecules. This is also supported by solid-state NMR studies.

Investigations at RT as a function of RH have been performed and compared to water uptake studies (Fig. 6). Contrary to the adsorption isotherm, there is a constant increase in conductivity when starting with a well dried material. This is probably due to the macroporous morphology of the pellet, enabling for the proton transport along water molecules that are adsorbed on the pore surfaces. Around 50 % RH, a step in conductivity is observed in agreement with the plateau of the water uptake study. At RT and 95 % RH, *p*-6PA-HPB has an outstanding conductivity of $2.5\text{-}10^{-2}$ $S{\cdot}cm^{-1}$ which is comparable to that of mixtures of inorganic acids (T. Uma, M. Nogami, Anal. Chem. 2008, 80, 506 - 508).

A comparison of the proton conductivity of several compounds is shown in table 1.

The compound C decomposed at 120°C.

Table 1: Proton conductivity vs. temperature at 1 bar $H_2O$ atmosphere

| Temperature in [C°] | Proton conductivity in [S/cm] | | | | |
|---|---|---|---|---|---|
| | **C(1)** | **XVII(3)** | **XVIII(4)** | **XIX(5)** | **XX(6)** |
| 22,4 | | | 3,63E-03 | | |
| 23,1 | | | | 2,41E-05 | |
| 24,7 | | | | | 4,13E-05 |
| 27,0 | | | 2,61E-08 | | |
| 27,0 | | | | 7,22E-06 | |
| 52,2 | | | | | 4,59E-04 |
| 78,2 | | | | | 7,73E-04 |
| 105,2 | | 1,10E-05 | | | |
| 111,8 | 1,49E-06 | | | | |
| 116,1 | | 5,42E-06 | | | |
| 116,5 | | | | | 3,91E-03 |
| 117,0 | | | | 2,45E-06 | |
| 117,1 | | | | | 3,70E-03 |
| 117,1 | | | | | 3,40E-03 |
| 117,1 | | | | 1,93E-04 | |
| 117,2 | | | 8,27E-05 | | |
| 117,2 | 2,34E-06 | | | | |
| 120,4 | | | 1,15E-04 | | |
| 122,2 | | | 5,20E-05 | | |
| 124,2 | 1,55E-06 | | | | |
| 125,8 | | 3,88E-06 | | | |
| 133,9 | | | | | 1,76E-03 |
| 136,2 | | | | 1,13E-04 | |
| 137,1 | 1,33E-06 | | | | |
| 137,3 | | | 1,08E-05 | | |

(continued)

| | C(1) | XVII(3) | XVIII(4) | XIX(5) | XX(6) |
|---|---|---|---|---|---|
| 146,2 | | 1,28E-05 | | | |
| 154,6 | 1,75E-06 | | | | |
| 155,3 | | | | | 1,55E-03 |
| 155,3 | | | 3,22E-06 | | |
| 155,3 | | | | | 1,48E-03 |
| 156,1 | | | | 9,06E-05 | |
| 156,1 | 1,33E-06 | | | | |
| 176,6 | | 6,32E-05 | | | |
| 178,3 | | | | 8,21E-05 | |

VII. Wide Angle X-Ray Scattering (WAXS)

The WAXS measurements were made with a standard copper anode (2.2 kW) source with a pinhole collimator equipped with an X-ray mirror (Osmic type CMF15-sCu6) and a Bruker detector (High-star) with 1024.1024 pixels.
Angular range: 2 - 30°
Resolution= 0.07°
Intensity: $2.10^6$ Counts/s
Beam divergence: $\Delta\theta = 0.4°$
Suppression of the Cu-Kβ-radiation; $\Delta E/E < 0.04$

X-ray measurements at different temperatures and relative humidities (RH) were performed (see Fig. 2) and it was found that *p*-6PA-HPB is crystalline and that the local order is not affected by changing these parameters.

VIII. Two-Dimensional Wide-Angle X-Ray Scattering (2D WAXS)

The 2D WAXS experiments were performed by means of a rotating anode (Rigaku 18 kW) X-ray beam with a pinhole collimation and a 2D Siemens detector. A double graphite monochromator for the Cu-$K_\alpha$ radiation ($\lambda = 0.154$ nm) was used. The samples were prepared by filament extrusion using a home-built mini-extruder. The material was heated up to ca 200 °C, temperature at which it becomes plastically deformable, and was extruded as 0.7 mm thin fiber by a constant-rate motion of the piston along the cylinder.

Two-dimensional wide-angle X-ray scattering (2D WAXS) experiments on mechanically oriented filaments show that *p*-6PA-HPB self-assembles into columnar structures in which the molecules are stacked on top of each other with a distance of 0.6 nm, and an intercolumnar distance of 1.4 nm (Fig. 3). *p*-6PA-HPB shows a columnar alignment in the extruded filaments perpendicular to the alignment direction. This unusual orientation behavior has been observed recently for the first time in low-molecular-weight discotic molecules (X. Feng, W. Pisula, L. Zhi, M. Takase, K. Müllen, Angew. Chem. Int. Ed. 2008, 47, 1703 -1706). Strong hydrogen bond interactions between phosphonic acid groups lead to a perpendicular orientation of the columnar structures. During extrusion, the molecules first assemble into a 2D network due to the hydrogen bonds between the phosphonic acid groups and further into a 3D columnar organization.

## Claims

**1.** Proton-conducting organic compound having the formula (I),

$$R^1(R^2)_m(R^3)_n \qquad (I)$$

wherein

- $R^1$ is an optionally fused aromatic, cyclic or polycyclic moiety comprising 1 to 200 carbon atoms, able to have 3 to 60 substituents;
- the substituents $R^2$ are identical or different and are each a group comprising at least one phosphonic acid moiety;

- the substituents $R^3$ are identical or different and are each hydrogen, a halogen atom, or a group having 1 to 60 carbon atoms;
- m is a number within the range 3 to 60;
- n is a number within the range 0 to 57;
- m+n is within the range of 3 to 60,

**characterized in that** it comprises at least 5, optionally fused, aromatic moieties.

2. Compound according to claim 1, **characterized in that** said aromatic moieties comprise six-membered carbon rings

3. Compound according to claim 1 or 2 **characterized in that** $R^1$ has a $C_3$ symmetry.

4. Compound according to claim 3, **characterized in that** $R^1$ has a $C_6$ symmetry.

5. Compound according to at least one of the preceeding claims, **characterized in that** $R^1$ comprises moieties of the formula (II) and/or (III) and/or (IV) and/or (V) and/or (VI) and/or (VII) and/or (VIII) and/or (IX) and/or (X) and/or (XI) and/or (XII)

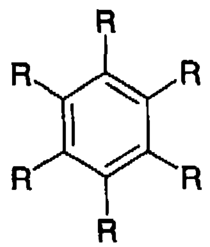

(II)

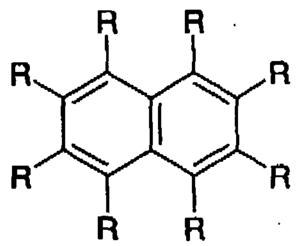

(III)

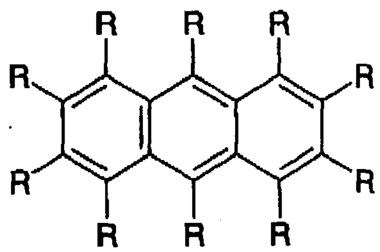

(IV)

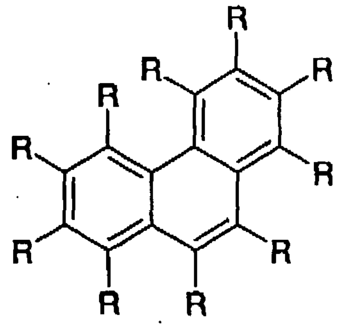

(V)

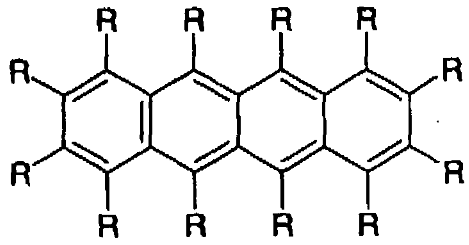

(VI)

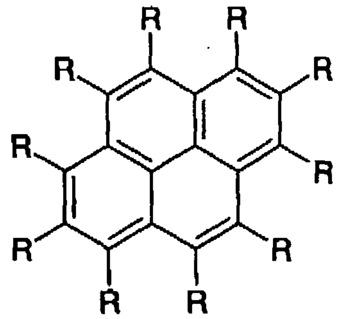

(VII)

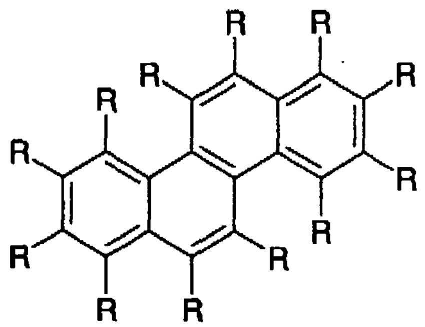

(VIII)

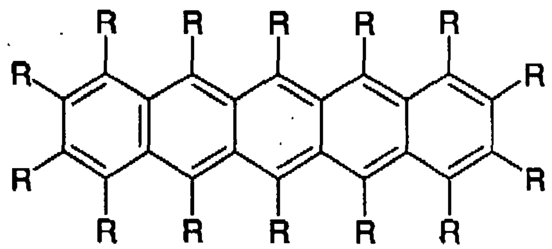

(IX)

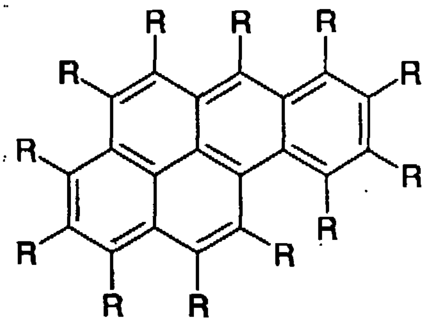

(X)

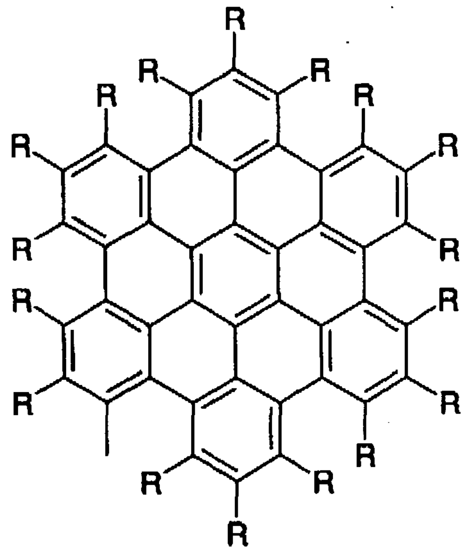

(XI)

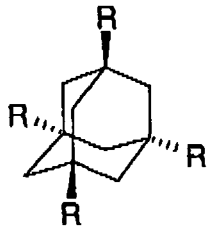

(XII)

wherein R are identical or different and indicate each the position of the substituents $R^2$ and/or $R^3$.

**6.** Compound according to at least one of the preceeding claims, **characterized in that** $R^2$ is an aromatic moiety of formula (XIII)

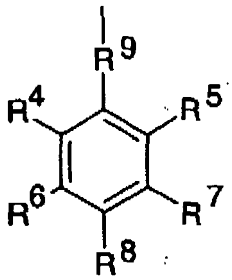

(XIII)

wherein $R^4$, $R^6$, $R^6$, $R^7$, and $R^8$ are identical or different and are each hydrogen, a halogen atom, a group having 1 to 40 carbon atoms, or a group comprising at least one phosphonic acid moiety, provided that at least one of the rests $R^4$, $R^5$, $R^6$ and $R^7$, and $R^8$ is a group comprising at least one phosphonic acid moiety, and $R^9$ is a bond, a alkylene group, an alkenyl group, an alkinyl group or a cycloalkylene group.

**7.** Compound according to 6, **characterized in that** $R^8$ comprises at least one phosphonic acid moiety.

**8.** Compound according to at least one of the preceeding claims 6 or 7, **characterized in that** $R^6$ and/or $R^7$ comprises at least one phosphonic acid moiety.

**9.** Compound according to at least one of the preceeding claims, **characterized in that** it comprises at least one moiety of formula (XIV)

$$-R_o-P(C)(CH)_2 \qquad \text{(XIV)}$$

wherein R is a group having 1 to 40 carbon atoms and wherein o is a number within the range of 0 to 1.

**10.** Compound according to at least one of the preceeding claims, **characterized in that** it has a degree of crystallinity of at least 30%.

**11.** Compound according to at least one of the preceeding claims, **characterized in that** it has a melting point of at least 100°C.

**12.** Compound according to at least one of the preceeding claims, **characterized in that** it has a proton conductivity of at least $10^{-3}$ S/cm, when measured at 95% RH at 25°C.

**13.** Compound according to at least one of the preceeding claims, **characterized in that** it has a electron conductivity of at least 1 S/cm

**14.** Compound according to at least one of the preceeding claims, **characterized in that** said phosphonic acid moieties form a 3 dimensional lattice.

**15.** Proton-conducting material having a degree of crystallinity of at least 30%, **characterized in that** it comprises:

i) at least one organic compound having the formula (I),

$$R^1(R^2)_m(R^3)_n \qquad \text{(I)}$$

wherein

- $R^1$ is an optionally fused aromatic, cyclic or polycyclic moiety comprising 1 to 200 carbon atoms, able to have 3 to 60 substituents;
- the substituents $R^2$ are identical or different and are each a group comprising at least one phosphonic acid moiety;
- the substituents $R^3$ are identical or different and are each hydrogen, a halogen atom, or a group having 1 to 60 carbon atoms;
- m is a number within the range 3 to 60;

- n is a number within the range 0 to 57;
- m+n is within the range of 3 to 60;
- said compound comprises at least 4, optionally fused, aromatic moieties,

and
ii) crystal water.

**16.** Material according to claim 15, **characterized in that** it comprises at least 5, optionally fused, aromatic moieties.

**17.** Fuel cell comprising at least a compound according to claim 1 or a material according to claim 15.

**18.** Use of a compound according to claim 1 or a material according to claim 15 in electrode materials, as a polyelectrolyte and/or as an additive for fuel cell applications.

Fig. 1

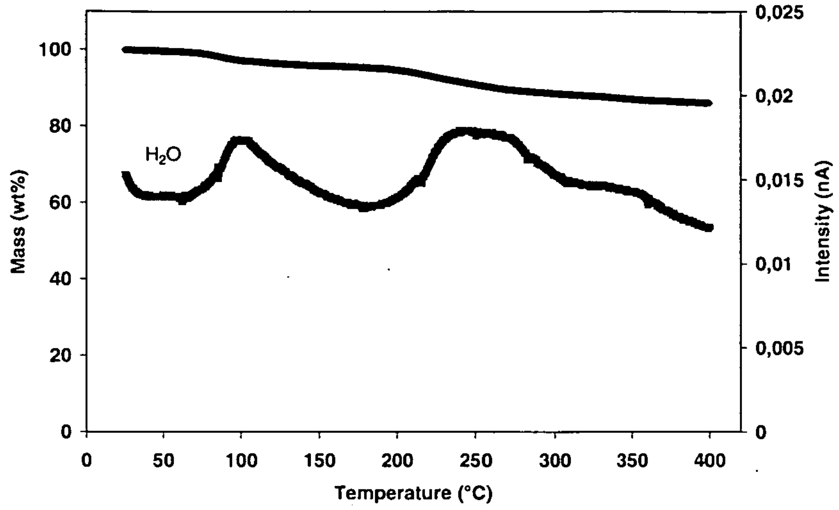

100
80
60
40
20
0
Mass (wt%)
$H_2O$
0,025
0,02
0,015
0,01
0,005
0
Intensity (nA)
0
50
100
150
200
250
300
350
400
Temperature (°C)


Fig. 2

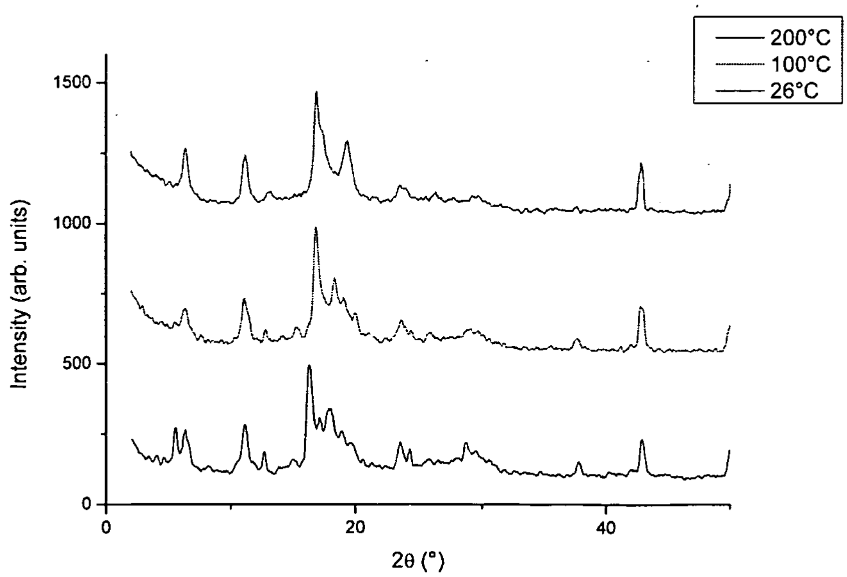

200°C
100°C
26°C
1500
1000
500
0
Intensity (arb. units)
0
20
40
2θ (°)

Fig. 3

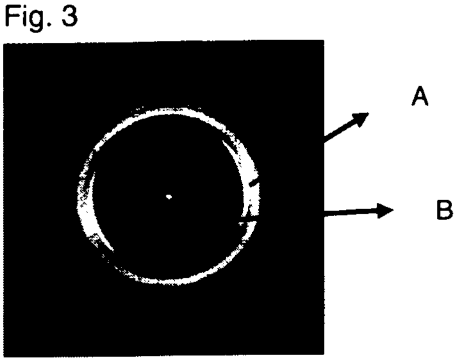


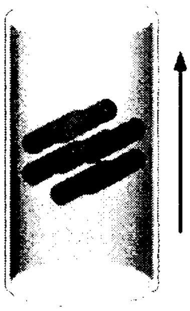

Fig. 4

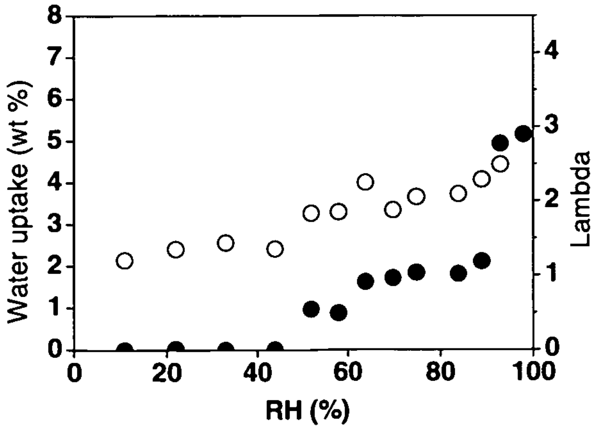

Fig. 5

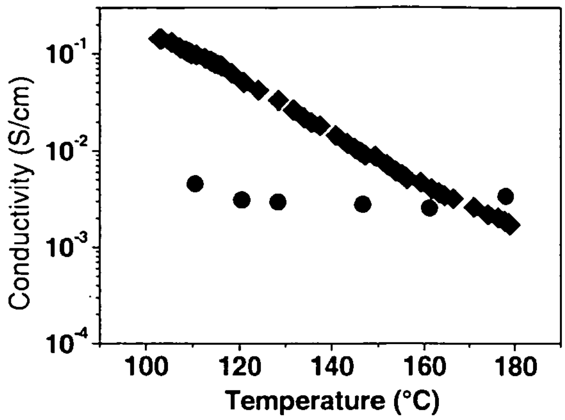
Conductivity (S/cm)
$10^{-1}$
$10^{-2}$
$10^{-3}$
$10^{-4}$
100
120
140
160
180
Temperature (°C)

Fig. 6

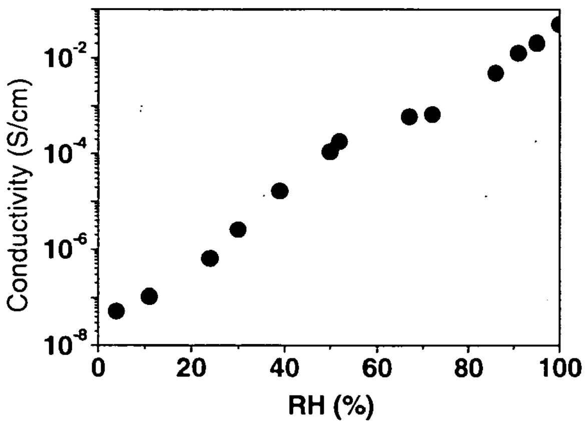
Conductivity (S/cm)
$10^{-2}$
$10^{-4}$
$10^{-6}$
$10^{-8}$
0
20
40
60
80
100
RH (%)

Europäisches Patentamt
European Patent Office
Office européen des brevets

## PARTIAL EUROPEAN SEARCH REPORT

which under Rule 63 of the European Patent Convention shall be considered, for the purposes of subsequent proceedings, as the European search report

Application Number
EP 09 00 7533

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | MAXYM V. VASYLYEV, DIDIER ASTRUC, RONNY NEUMANN: "Dendritic Phosphonates and the in situ Assembly of Polyperoxophosphotungstates: Synthesis and Catalytic Epoxidation of Alkenes with Hydrogen Peroxide" ADVANCED SYNTHESIS & CATALYSIS, vol. 347, no. 1, 2005, pages 39-44, XP002550076 Scheme 1* compound PD2 * | 1-3,5-9 | INV. C07F9/38 H01M8/02 |
| A | * page 40, column 2; compound PD1 * | 1,2,5-7, 9 | |
| X | FABRICE ODOBEL, ERROL BLART, MARIE LAGRÉE, MONIQUE VILLIERAS, HAMADA BOUJTITA, NABIL EL MURR, S. CARAMORI, C. A. BIGNOZZI: "Porphyrin dyes for TiO2 sensitization" J. MATER. CHEM., vol. 3, 2003, pages 502-510, XP002550077 Fig. 1* compounds 2,6 * | 1,6,7,9 | |
| | -/-- | | |

TECHNICAL FIELDS SEARCHED (IPC)
C07F
H01M

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

2

| Place of search | Date of completion of the search | Examiner |
|---|---|---|
| Munich | 2 November 2009 | Richter, Herbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

Europäisches Patentamt
European Patent Office
Office européen des brevets

# PARTIAL EUROPEAN SEARCH REPORT

Application Number
EP 09 00 7533

| DOCUMENTS CONSIDERED TO BE RELEVANT | | | CLASSIFICATION OF THE APPLICATION (IPC) |
|---|---|---|---|
| Category | Citation of document with indication, where appropriate, of relevant passages | Relevant to claim | |
| X | LEJEUNE N. ET AL.: "Synthesis, Crystal Structure and Thermal Properties of Phosphorylated Cyclotriphosphazenes" EUROPEAN JOURNAL OF INORGANIC CHEMISTRY, vol. 2008, no. 1, 8 November 2007 (2007-11-08), pages 138-143, XP002550078 Scheme 1* compound 4 * | 1,2,5,9 | |
| X | * figure 3; table 3 * | 11 | |
| X | WO 2005/052032 A1 (RHODIA CONS SPEC LTD [GB]; CENTRE NAT RECH SCIENT [FR]; CAMINADE ANNE-) 9 June 2005 (2005-06-09) * examples 5,6,19,21 * | 1,2,5,9 | TECHNICAL FIELDS SEARCHED (IPC) |
| X | BRENDA LONG, KIRILL NIKITIN, AND DONALD FITZMAURICE: "Self-Assembly of a Tripodal Pseudorotaxane on the Surface of a Titanium Dioxide Nanoparticle" JOURNAL OF THE AMERICAN CHEMICAL SOCIETY, vol. 125, no. 15, 2003, pages 5152-5160, XP002550079 Scheme 1* compound 9 * | 1-3,6,9 | |
| X | BRENDA LONG, KIRILL NIKITIN, AND DONALD FITZMAURICE: "Assembly of an Electronically Switchable Rotaxane on the Surface of a Titanium Dioxide Nanoparticle" JOURNAL OF THE AMERICAN CHEMICAL SOCIETY, vol. 125, no. 50, 2003, pages 15490-15498, XP002550080 scheme 2 * page 15497; compounds 1-4 * | 1-3,6,9 | |

-/--

2

EPO FORM 1503 03.82 (P04C10)

Europäisches Patentamt
European Patent Office
Office européen des brevets

# PARTIAL EUROPEAN SEARCH REPORT

Application Number
EP 09 00 7533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAPOLI, MASSIMO DE; NARDIS, SARA; PAOLESSE, ROBERTO; VICENTE, M. GRACA H.; LAUCERI, ROSARIA; PURELLO, ROBERTO: "Hierarchical Porphyrin Self -Assembly in Aqueous Solution" JOURNAL OF THE AMERICAN CHEMICAL SOCIETY, vol. 126, no. 19, 2004, pages 5934-5935, XP002550081 * figures 2,3; compound H2TPPP * | 1,2,6,7, 9 | |
| A | * page 5935, column 1, paragraph 2 * | 10,15 | |
| X | MAERKL, GOTTFRIED; GSCHWENDNER, KARL; ROETZER, INGRID; KREITMEIER, PETER: HELVETICA CHIMICA ACTA, vol. 87, no. 4, 2004, pages 825-844, XP002550082 Scheme 5* table 8; compound 12 * | 1,2,9 | TECHNICAL FIELDS SEARCHED (IPC) |
| X | THOMAS E. CLARK, MOHAMED MAKHA, ALEXANDRE N. SOBOLEV, DIAN SU, HENRY ROHRS, MICHAEL L. GROSS, JERRY L. ATWOOD AND COLIN L. RASTON: "Self-organised nano-arrays of p-phosphonic acid functionalised higher order calixarenes" NEW JOURNAL OF CHEMISTRY, vol. 32, 2008, pages 1478-1483, XP002550083 Scheme 1 * page 1479 - page 1483; compounds 2F-4F * | 1,2,9, 11,14 | |
| | -/-- | | |

2

EPO FORM 1503 03.82 (P04C10)

Europäisches Patentamt
European Patent Office
Office européen des brevets

# PARTIAL EUROPEAN SEARCH REPORT

Application Number
EP 09 00 7533

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | FLORENT PERRET, KINGA SUWINSKA, BERNARD BERTINO GHERA, HÉLÈNE PARROT-LOPEZ AND ANTHONY W. COLEMAN: "Synthesis, solid state structures and interfacial properties of new para-phosphonato-O-alkoxy-calix[8]arene derivatives" NEW JOURNAL OF CHEMISTRY, vol. 31, 2007, pages 893-900, XP002550084 * page 899, column 1; figure 1; compounds 5A-5F * | 1,2,9,11 | |
| A | ITOH T. ET AL.: "Anhydrous proton-conducting electrolyte membranes based on hyperbranched polymer with phosphonic acid groups for high temperature fuel cells" JOURNAL OF POWER SOURCES, vol. 178, 2008, pages 627-633, XP022509802 Scheme 1 and "2. Experimental" in particular the polymers HBP(L)-OH and HBP-PA-Ac * page 628 - page 629 * | 1-18 | TECHNICAL FIELDS SEARCHED (IPC) |
| A | WITT D ET AL: "Calix[4]arene Phosphonates - Recognition of Amino Alcohols in Water" HETEROATOM CHEMISTRY, VCH PUBLISHERS, DERFIELD BEACH, FL, US, vol. 15, no. 2, 23 March 2004 (2004-03-23), pages 155-161, XP008060328 ISSN: 1042-7163 Scheme 2* compound 1 * | 1,2,5-7, 9,15 | |

-/--

EPO FORM 1503 03.82 (P04C10)

2

Europäisches Patentamt
European Patent Office
Office européen des brevets

# PARTIAL EUROPEAN SEARCH REPORT

Application Number
EP 09 00 7533

| DOCUMENTS CONSIDERED TO BE RELEVANT | | | CLASSIFICATION OF THE APPLICATION (IPC) |
| --- | --- | --- | --- |
| Category | Citation of document with indication, where appropriate, of relevant passages | Relevant to claim | |
| D,A | JENS BECKMANN, ROMAN RÜTTINGER AND TORSTEN SCHWICH: "1,3,5-Benzene-tri-p-phenylphosphonic Acid. A New Building Block in Supramolecular Chemistry" CRYSTAL GROWTH & DESIGN, vol. 8, no. 9, 2008, pages 3271-3276, XP002550282 * page 3274, column 1, line 21 - line 23; figure 2; compound 8 * ----- | 1-3,5-7, 9-11,14 | |
| | | | TECHNICAL FIELDS SEARCHED (IPC) |

2

EPO FORM 1503 03.82 (P04C10)

Europäisches Patentamt
European Patent Office
Office européen des brevets

# INCOMPLETE SEARCH SHEET C

Application Number
EP 09 00 7533

Claim(s) searched completely:
15-18

Claim(s) searched incompletely:
1-14

Claim(s) not searched:
-

Reason for the limitation of the search:

The initial phase of the search revealed a very large number of documents relevant to the issue of novelty. So many documents were retrieved that it is impossible to determine which parts of the claims 1-14 may be said to define subject-matter for which protection might legitimately be sought (Article 84 EPC). For these reasons, a meaningful search of the whole claimed subject matter of claims 1-14 could not be carried out (Rule 63 EPC). The extent of the search was consequently limited.

The search of claims 1-14 was restricted to the Beilstein X-fire database.

## ANNEX TO THE EUROPEAN SEARCH REPORT ON EUROPEAN PATENT APPLICATION NO.

EP 09 00 7533

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2009

| Patent document cited in search report | Publication date | Patent family member(s) | Publication date |
|---|---|---|---|
| WO 2005052032 A1 | 09-06-2005 | BR PI0416417 A | 09-01-2007 |
| | | CA 2544380 A1 | 09-06-2005 |
| | | CN 1902263 A | 24-01-2007 |
| | | EP 1689807 A1 | 16-08-2006 |
| | | FR 2862650 A1 | 27-05-2005 |
| | | JP 2007514015 T | 31-05-2007 |
| | | US 2007083034 A1 | 12-04-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 02088219 A
- US 4191618 A
- US 4212714 A
- US 4333805 A


### Non-patent literature cited in the description


- **A. Chernyshev ; K. M. Armstrong ; S. Cukierman.** *Biophys. J.,* 2003, vol. 84, 238
- **C. H. Yu ; S. Cukierman ; R. Pomès.** *Biophys. J.,* 2003, vol. 84, 816
- **R. Pomes.** *Biological Physics,* 1999, vol. 487, 194-200
- **K. D. Kreuer ; S. J. Paddison ; E. Spohr ; M. Schuster.** *Chem. Rev.,* 2004, vol. 104, 4637
- **K. D. Kreuer.** *Chem. Mater.,* 1996, vol. 8, 610
- **M. A. Hickner ; H. Ghassemi ; Y. S. Kim ; B. R. Einsla ; J. E. McGrath.** *Chem. Rev.,* 2004, vol. 104, 4587-4612
- **K. Hinokuma ; M. Ata.** *Chem Phys. Lett.,* 2001, vol. 341, 442
- **Y. M. Li ; K. Hinokuma.** *Solid State Ionics,* 2002, vol. 150, 309
- **M. Yamada ; I. Honma.** *Chem. Phys. Lett.,* 2005, vol. 402, 324
- **S. M. Haile ; C. R. I. Chisholm ; K. Sasaki ; D. A. Boysen ; T. Uda.** *Faraday Discuss.,* 2007, vol. 134, 17
- **D. Boysen ; T. Uda ; C. R. I. Chisholm ; S. M. Haile.** *Science,* 2004, vol. 303, 68
- **J. C. J. Bart.** *Acta Cryst.,* 1968, vol. B24, 1277-1287
- **M. D. Watson ; A. Fechtenkötter ; K. Müllen.** *Chem. Rev.,* 2001, vol. 101, 1267-1300
- **K. Kobayashi ; T. Shirasaka ; A. Sato ; E. Horn ; N. Furukawa.** *Angew. Chem. Int. Ed.,* vol. 38, 3483-3485
- **K. Kobayashi ; T. Shirasaka ; A. Sato ; E. Horn ; N. Furukawa.** *Tetrahedron Lett.,* 2000, vol. 41, 89-93
- **K. Kobayashi ; A. Sato ; S. Sakamoto ; K. Yamaguchi.** *J. Am. Chem. Soc.,* 2003, vol. 125, 3035-3045
- **K. E. Maly ; E. Gagnon ; T. Maris ; J. D. Wuest.** *J. Am. Chem. Soc.,* 2007, vol. 129, 4306-4322
- **M. Schuster ; T. Rager ; A. Noda ; K. D. Kreuer ; J. Maier.** *Fuel Cells,* 2005, vol. 5, 355-365
- **H. Steininger ; M. Schuster ; K. D. Kreuer ; A. Kaltbeitzel ; B. Bingöl ; W. H. Meyer ; S. Schauff ; G. Brunklaus ; J. Maier ; H. W. Spiess.** *Phys. Chem. Chem. Phys.,* 2007, vol. 9, 1764-1773
- **S. J. Paddison ; K. D. Kreuer ; J. Maier.** *Phys. Chem. Chem. Phys.,* 2006, vol. 8, 4530-4542
- **J. R. Macdonald.** Impedance. Spectroscopy, Emphasizing Solid Materials and Systems. John Wiley and Sons, 1987
- **Kremer F. ; Schonhals A. ; Luck W.** Broadband Dielectric Spectroscopy. Springer-Verlag, 2002
- **J. March.** Advanced organic chemistry. Wiley, 1985
- **J. R. Macdonald.** Impedance Spectroscopy, Emphasizing Solid Materials and Systems. John Wiley and Sons, 1987
- Organikum. VEB Deutscher Verlag, 1988
- **J. March.** Advanced Organic Chemistry. John Wiley & Sons, 1985
- **Houben-Weyl.** Methods of Molecular Transformation, Science of Synthesis. Thieme, 2007, vol. 31 b, 1939-1962
- **Feng, X. ; Wu, J. ; Enkelmann, V. ; Mullen, K.** *Org. Lett.,* 2006, vol. 8, 1145-1148
- **J. Beckmann ; R. Rüttinger ; T. Schwich.** *Crystal Growth & Design,* 2008, vol. 8 (9), 3271-3276
- **M. V. Vasylyev ; D. Astruc ; R. Neumann.** *Adv. Synth. Catal.,* 2005, vol. 347, 39-44
- **L. Greenspan, J.** *Res. Natl. Bur. Stand., A Phys. Chem.,* 1976, vol. 81A, 89-96
- **R. Büll.** *Angew. Chem.,* 1936, vol. 49, 145-158
- **S. Hara ; S. Takano ; M. Miyayama.** *J. Phys. Chem. B,* 2004, vol. 108, 5634-5639
- **A. Kaltbeitzel ; S. Schauff ; H. Steininger ; B. Bingöl ; G. Brunklaus ; W. H. Meyer ; H. W. Spiess.** *Solid State Ionics,* 2007, vol. 178, 469-474
- **K. D. Kreuer.** *J. Membr. Sci.,* 2001, vol. 185, 29-39
- **K. D. Kreuer ; S. J. Paddison ; E. Spohr, M. Schuster.** *Chem. Rev.,* 2004, vol. 104, 4637-4678

- **T. Uma ; M. Nogami.** *Anal. Chem.,* 2008, vol. 80, 506-508
- **X. Feng ; W. Pisula ; L. Zhi ; M. Takase ; K. Müllen.** *Angew. Chem. Int. Ed.,* 2008, vol. 47, 1703-1706